# EUROPEAN PATENT SPECIFICATION

(11) **EP 3 895 034 B1**
(45) Date of publication and mention of the grant of the patent: **21.08.2024**
(21) Application number: 19836726.0
(22) Date of filing: 10.12.2019
(51) Int. Cl.: G06F 16/14, G06F 16/2455

(54) **DEVICE MESSAGE FRAMEWORK**
GERÄTENACHRICHTENRAHMEN
CADRE DE MESSAGES DE DISPOSITIF

(30) Priority: 13.12.2018 US 201816219623
(43) Date of publication of application: 20.10.2021
(73) Proprietor: Zoox, Inc., Foster City, CA 94404 (US)
(72) Inventor: QUINN, Carl Edward, Foster City, California 94404 (US)
(74) Representative: EIP
(86) International application number: PCT/US2019/065531
(87) International publication number: WO 2020/123544

(56) References cited:
- US-A1- 2007 230 270
- US-A1- 2011 187 861
- US-A1- 2015 131 964
- US-A1- 2018 188 225

## Description

### BACKGROUND

Many devices, including robotic, computing, and autonomous or semi-autonomous vehicles, can produce large amounts of data that are typically analyzed and stored remote from the devices themselves. Such data, when logged to a single file, can create very large files, particularly given a long span of time. This large file size can present problems with recording sequential messages over long periods of time, when transmitting to remote computing locations, and with manipulating offline, since they typically need to be copied locally before they can be opened. In addition, many times only a small portion of the data is needed for analytic purposes, resulting in a large amount of data to be transmitted and accessed relative to the data that is needed. This, in turn, can cause unnecessary use of bandwidth, storage, and compute resources. US2011187861A relates to a vehicle-mounted surveillance device.

### SUMMARY

The invention is defined by the features of the independent claims.

Further embodiments are the subject-matter of the dependent claims.

Viewed from a first aspect, there is provided a system, comprising one or more processors, and memory that stores instructions which, when executed by the one or more processors, cause the system to receive a message comprising data generated by one or more subsystems of an autonomous vehicle, a timestamp, and a topic, store, in a first directory of one or more data stores, a plurality of files, a first file of the plurality of files comprising at least a portion of the data and stored in a first subdirectory of the first directory according to a hierarchy, the hierarchy partitioning the data into the plurality of files corresponding to different time windows based on the timestamp, where the plurality of files of the first directory within the hierarchy are further partitioned into one or a plurality of topics within the different time windows, the plurality of topics including at least one of a first topic comprising raw sensor data generated by the one or more subsystems of the autonomous vehicle, and a second topic comprising data derived from the raw sensor data, store, in a second directory of the one or more data stores, a plurality of second files, a second file of the plurality of second files based at least in part on the portion of the data and stored in a second subdirectory of the second directory according to the hierarchy, receive a request, the request comprising a requested topic a start time, or an end time; and provide one or more of the first file or the second file based at least in part on the requested topic, the start time, or the end time.

Viewed from a second aspect, there is provided a method, comprising receiving first device data, the first device data comprised of a plurality of files and corresponding to message data generated by one or more components of a device during a time period, storing, on one or more data stores and at a first location, the first plurality of files according to a hierarchical data structure, the hierarchical data structure partitioning the data into the plurality of files corresponding to different time windows based on the timestamp, where the plurality of files of the first directory within the hierarchy are further partitioned into one or a plurality of topics within the different time windows, the plurality of topics including at least one of a first topic comprising raw sensor data generated by the one or more subsystems of the autonomous vehicle, and a second topic comprising data derived from the raw sensor data, obtaining second device data comprising a second plurality of files, the second device data associated with the time period; and storing the second device data at a second location on the one or more data stores according to the hierarchical data structure.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different figures indicates similar or identical components or features.
FIG. 1 illustrates an example system in which an autonomous vehicle data service receives data from an autonomous vehicle and uses a hierarchical data structure to store, access, and perform analytics on the data.
FIG. 2 illustrates an example diagram of the way data is broken up into files in a hierarchical data structure of FIG. 1.
FIG. 3 illustrates another example system in which an autonomous vehicle data service receives data from an autonomous vehicle and uses a hierarchical data structure to store, access, and perform analytics on the data.
FIG. 4 illustrates example communications between different aspects of an autonomous vehicle service, such as the service of FIG. 3.
FIG. 5 illustrates a hierarchical data structure including a layer of data.
FIG. 6 illustrates an example of the contents of a file of the hierarchical data structure of FIG. 5.
FIG. 7 illustrates an example of how data may be accessed from two related but different file trees or data structures, of the hierarchical data structure of FIG. 5.
FIG. 8 illustrates another example of two related but different file trees or data structures, of the hierarchical data structure of FIG. 5.
FIG. 9 illustrates an example process for accessing and storing robotic device data in a hierarchical data structure.
FIG. 10 illustrates an example process for accessing and combining robotic device data using a hierarchical data structure.
FIG. 11 illustrates an example process for receiving, storing, accessing and combining data using a hierarchical data structure.
FIG. 12 illustrates an example of subsystems that provides messages and data to a data service.

### DETAILED DESCRIPTION

This disclosure describes methods, apparatuses, and systems using a directory or hierarchical data structure to efficiently organize, access, and perform analytics and operations on data obtained from a device, such as a robotic device or autonomous vehicle. A device, such as an autonomous vehicle, may generate multiple messages, including log data, sensor data, and decision points, in the normal course of operation. As described herein, the device itself, or a service that receives the data, may write the data into a hierarchical data structure to enable much faster access, and more efficient and intuitive analytics and operators to be performed on the data. The hierarchical data structure may organize messages into different topics (data identifiers). A file in the hierarchy, which may be the lowest level in the data structure, may include one or a number of messages (e.g., logs or other data) for a specific topic. Each file may be associated with a time at which it was recorded or to which it pertains, and may be less than a threshold size that serves as a limit on the size of the files. This time value may represent a second level of the data structure. In some aspects, the device or autonomous vehicle may organize the data created by the device or autonomous vehicle in this way to enable faster, more efficient, and more precise reporting of certain data to a linked service or system.

In some aspects, one or more files of the data structure may be modified and stored using the data structure, for example, in one or more layers of the data structure. In some examples, the data is stored back into the data structure while in other examples the data is stored into another data structure that organizes data in the same way. In one example, this may include bundling certain topics together from the same time windows, excluding other topics, changing the values in one or more files, etc. This modified data may then be stored, for example, in a subdirectory or layer (e.g., a variant layer), in the data structure. In this way, analytics or pre-processing may be performed on various files and stored in the same data structure to enhance downstream processing and make accessing the modified data much more efficient.

In some aspects, the data structure may include a level that specifies a device, such as a vehicle, to which the file or files pertain, such as in the case of a multi-vehicle data management system or service. A root level may be implemented to identify one or more other characteristics of the data, such as storage location, access permission or restriction information, and so on. In this way, the data can be intelligently and efficiently organized, processed, and accessed.

In some aspects, the lowest time level may represent a minute, such that each file may include data for a one minute interval, for example, generated by a device, such as one or more messages generated onboard an autonomous vehicle, though any other time interval is contemplated (e.g., milliseconds, seconds, hours, etc.). A file, as describe herein, contains a small amount (less than a threshold amount) of data, and so can provide a number of specific benefits and advantages over current systems. The described data directory or hierarchical data structure may address one or more identified issues with the previously used system, including a prohibitive amount of data to handle with each file or files, inflexible, arbitrary topic groupings, difficulty in extending data storage, slow access, files reliant on specific operating systems (e.g., ROS), lack of unification is places to store and access, and no unified API to access.

For example, some runs or time spans of data, using one logging system, could be greater than 100 GB, which would require 1.5 hours to download at 20 MB/second. By separating the data out into shorter time periods and organized by more topics, which can be customizable, the data can be download or communicated to another system much more rapidly, and the pertinent data accessed much more quickly. The described data directory may provide small, granular files that are easy to locate and access. The data directory may provide for topic access directly by name, thus providing an intuitive and efficient way to access the data on a very granular level.

The described hierarchical data structure may store the files organized in multiple levels for certain topics, and does not need to crop or otherwise exclude data from records, and thus provides a more complete data record that can better support a wide range of devices as compared to existing methods. In some aspects, video files in the described hierarchical data structure may be handled through a random access API, to further alleviate inefficiencies in storing and accessing large amounts of data.

The described data directory can interface with various systems and can support standard storage techniques.

As described in greater detail below and used throughout, a message may represent a lowest level unit in a hierarchical data structure. In some aspects a message may represent a message that was sent on vehicle (or other device), and may include an associated timestamp and metadata. In some aspects, the messages may include log data (e.g., data from a sensor, from an intermediary process, responses from components and/or subcomponents of devices/subsystems of a system, etc.). A topic may be a type of message sent over on the vehicle or device. A topic may be predefined in an autonomous vehicle service, or may be configurable. In some aspects, example topics may include data relating to or generated by a specific subsystem of a robotic device or autonomous vehicle, such as a LIDAR subsystem, a radar subsystem, an object determination subsystem, or various other subsystems In some other examples, topics may include certain decisions made, for example, in response to specific triggers, inputs from multiple subsystems used to make one or more determinations or decisions, data from one or multiple subsystems relating to a keyword, and so on.

A window may refer to a time period that topics are broken into. For example, it may be beneficial to separate topics into one minute windows in order to balance file size with freshness of data. A file may represent data pertaining to a window of a topic. A file may contain one or more messages pertaining to a specific topic. In some examples, one minute windows for files may equate to less than 1MB average file size (with larger files being in the range of 70-100 MB), which may be particularly beneficial for quickly sending or streaming the data responsive to requests and for accessing the data. A layer or subdirectory may refer to a layer or set or group of data with a root, variant identifier, and associated data or files, which may comprise one or more additional subdirectories into which the associated data or files are organized. Different layers or subdirectories may share parts or all of the same level structure, including time level(s), topic level(s), device identifier level(s), etc., but may contain different data or files. A variant or variant layer may be an alternate message set, for example, modified in some way from data collected from a vehicle. Such variant layers may provide additional functionality such as, but not limited to, associating a data set associated with one of multiple levels of access control, providing storage of certain portions on varying systems for faster access, providing sets of data that have been independently altered (e.g., by a test algorithm), and/or combinations of data from other layers. In some aspects, a variant may be optimized for performing custom analytics, more efficient pre-processing of the data, and/or offline use. In some aspects, operation of an autonomous vehicle may assume time measured in nanoseconds. During recall of data from one or more data stores, such variants and topics may be used for access control purposes. As a non-limiting example, certain variant layers may be stored on one data store and other variants in another data store. Data from one data store may only be available to one user, location, etc. based at least in part on the user, the variant, the location and the like. Further, when storing data, variant layers and topics may be selectively stored in different data stores for optimal retrieval. As a non-limiting example, data which is frequently accessed may be stored in a local root, whereas associated variants and/or topics which are infrequently accessed may be stored in a data store remote from and/or having longer access times. In some cases, the location different layers are stored may be determined based on latency and/or frequency of access to the data.

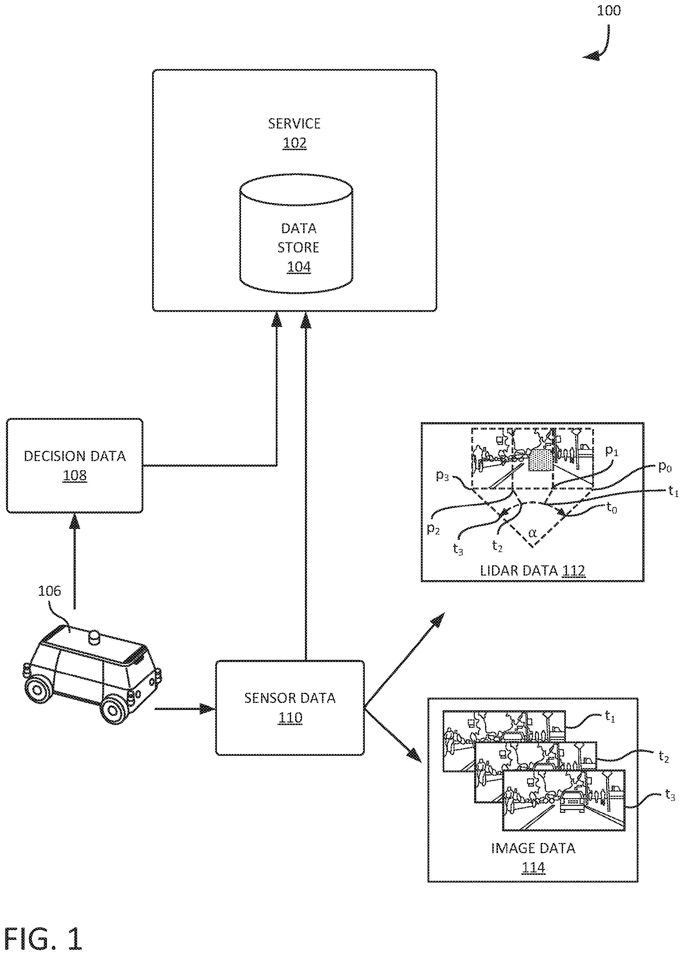

FIG. 1 illustrates an example system 100 in which a service 102 receives data from device 106, which as depicted, may include an autonomous vehicle, using a directory structure to store, access, and perform analytics on the data. It should be appreciated that device 106 as an autonomous vehicle is only given by way of example. The described techniques are applicable to a variety of devices, including devices with robotic components or features, such that a variety of other devices may be beneficially utilized in conjunction with the described hierarchical data structure.

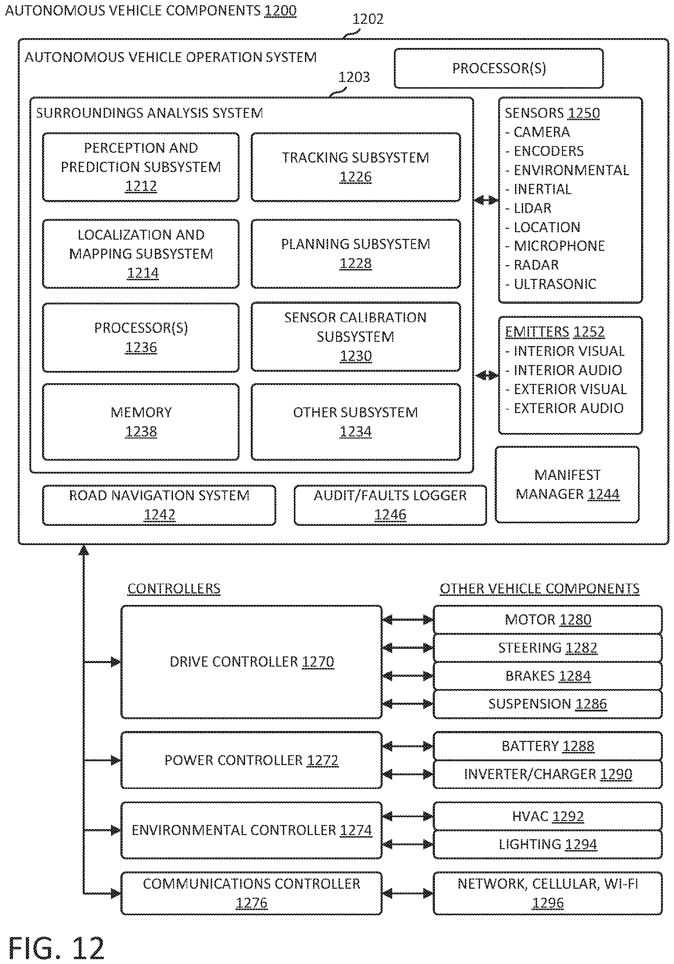

Device 106 may generate various data concerning sensor readings, data from a number of subsystems of the device106, decision points made, processing steps, and the like. This data may, in some cases, be very large. As illustrated, this data is represented by sensor data 110, which can include LIDAR data 112and image data 114, and decision data 108, which may include various other data, including log data, etc. FIG 12, as described below, details various subsystems in an autonomous or semi-autonomous vehicle, as an example of device 106, which may generate and report this or other types of data that may be referred to herein collectively as device or vehicle data.

In some aspects, the data generated by the various subsystems of device 106 may be in the form of messages or log data. These messages may be generated by the subsystems based on, for example, data obtained by one or more sensors of device 106. In some cases, one or more computing systems on the device 106 may package the messages or generate messages from raw or un-packaged data. In any of these cases, device 106, or computing systems thereof, may group the messages into files according to various topics to which the messages or data pertain. In some aspects, the topics may include various operating parameters of the device, sensor readings, operational decisions, and so on. The topics may be pre-defined for the service 102, may be predefined for a subset of the devices 106 managed by service 102, and/or may be customizable.

The device 106 may package the raw data or messages into files for different topics. In some aspects, device 106 may package the data into files at regular or variable intervals, such as at one minute intervals. The device 106 may send the files to service 102, which may store the data according to a hierarchical data structure, indexed by at least topic and time, into a data store 104.

The service 102 may include various computing systems, such as one or more servers, virtual computing instances, data stores, etc., and combinations thereof, to facilitate collection of device data, including decision data 108 and sensor data 110, from a number of devices 106. In some aspects, the service 102 may comprise storage, one or more processor(s), a memory, and an operating system. The storage, the processor(s), the memory, and the operating system may be communicatively coupled over a communication infrastructure. Optionally, the computer system may interact with a user, or environment, via input/output (I/O) device(s), as well as one or more other computing devices, such as device 106 over a network, via the communication infrastructure. The operating system may interact with other components to control one or more applications. In some instances, the computer system(s) may implement any hardware and/or software to implement various subsystems as described herein.

In some cases, the data store 104 may be provided by or associated with the service 102, or may be implemented by a separate system or service.

The service 102 may provide access to the data via an indexing system keyed to the hierarchical data structure. In some aspects, service 102, the device 106, or a combination thereof, may attach or otherwise organize the files indexed by time into various other hierarchical levels, such as vehicle or device identifier, root value, and other identifiers. The hierarchical data structure, or directory, may be used by the service 102 to store and provide access to specific files by root, device, topic, and time. In some cases, the service 102 may further enable modifying one or more files in the hierarchical data structure. The service 102 may further store the modified file or files back into the hierarchical data structure, for example, by adding or changing a layer to which the files pertain. In this way, the service 102 may facilitate quick and efficient access to device data on the granularity of topic indexed by time.

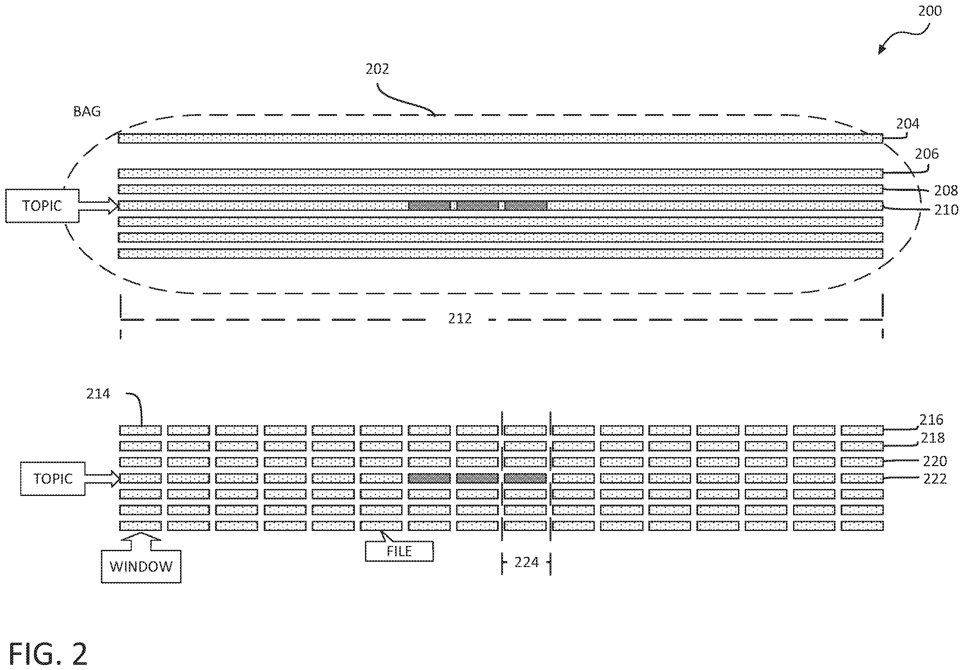

FIG. 2 illustrates an example diagram 200 of the way device data is broken up into files in the described directory or hierarchical data structure.

Under the hierarchical data structure described herein, represented by files 214, each file 214 represents one of a number of different topics 216, 218, 220, 222, for a given time period or window 224. In this way, each topic is contained in a series of files, separated by intervals of time. In some aspects, a one minute of time interval for window size 224 may provide a balance of useful information with a manageable file size.

In some aspects, the topics 216, 218, 220, 222 of series of files may be defined in a more precise and narrow way, such as including custom topics, than topics 204, 206, 208, 210 of bags 202, represented by another data organization scheme 212. In some examples, topics 216, 218, 220, 222 may be configured to correspond to any of a number of subsystems of an autonomous vehicle, operational criteria, types of data or messages, relating to different decision points, and so on.

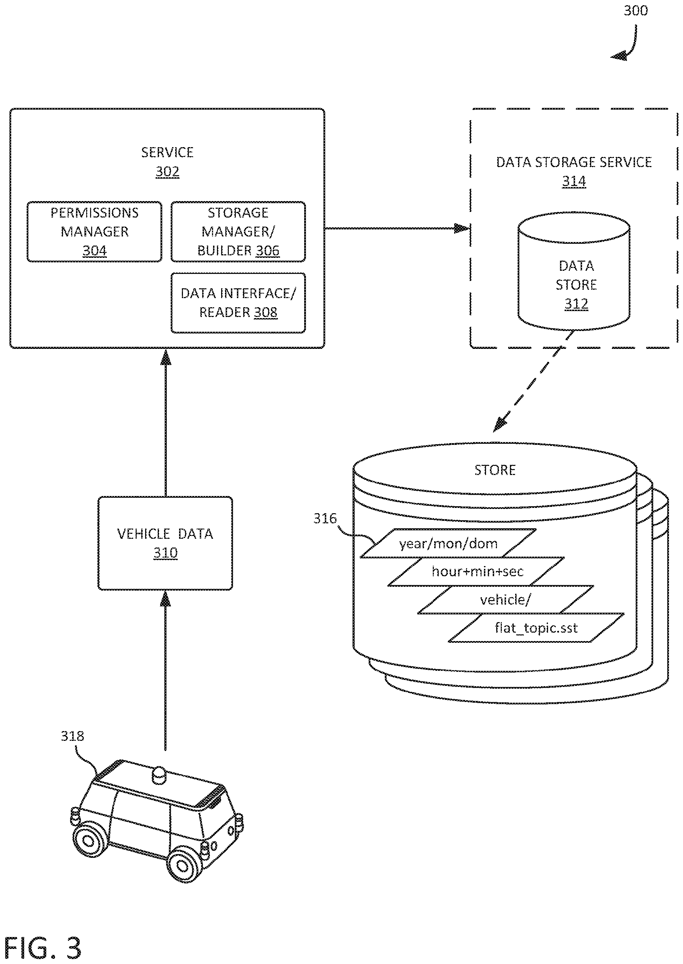

FIG. 3 illustrates another example system 300 in which a data service 302 receives data 310 from an autonomous or semi-autonomous vehicle 318 using a directory structure to store, access, and perform analytics on the data. System 300 may incorporate one or more aspects described above in reference to FIG. 1. For example, service 302 may incorporate one or more aspects of service 102. As similarly described in relation to FIG. 1, a service 302 may receive vehicle data 310 from one or more vehicles 318. The service 302 may either receive the data in, or categorize the data into, a hierarchical data structure organized by at least one of topic, time, vehicle, root, or other values. In some cases, data from multiple devices or vehicles 318 may be combined or amalgamated into a single data structure, using the hierarchical data structure, as will be described in greater detail below. Amalgamation may take various forms and combinations of forms, such as by adding or combining datasets from different vehicles, performing calculations (e.g., statistical calculations, testing of additional/alternative processes to be run on the device (for example, proposed new algorithms for perception, planning, prediction, and the like), etc.) to create data points based on data from multiple vehicles, and the like. In the illustrated example, service 302 may further include a permissions manager 304, a storage manager or builder 306, and a data interface or reader 308. Each of the permissions manager 304, storage manager 306, and data interface 308 may be services running on or provided by service 302, and/or may be operated on combined or distinct computing systems, as service 302. As also illustrated in example system 300, data store 312 may be separate from the service 302 and hosted or provided by a data storage service 314 or other networked computing services provider or system. In this example, data store 312 (which may be separate or integrated into service 302) may store files according to a hierarchal data structure 316 including various levels for year/month/date, hour, minute, second, vehicle, and topic.

The storage manager or builder 306 may receive the vehicle data 310 and write the vehicle data 310 to data store 312, according to data structure 316. In some aspects, the builder 306 may write the data to data store 312 using a location where the data is to be written to, for example, in data store 312, and a vehicle name or identifier. In some aspects, the builder 306 may associate the vehicle data 310 with different layers and/or levels of hierarchy 316, such as multiple levels of time, and topic identifier. It should be appreciated that vehicle 318 and builder 306 may each separate, or combined, perform the operations of associating the vehicle data 310 with various layers to be stored in data store 312. In some cases, the builder 306 may maintain an index or other data structure associating different files with different locations in the data store 312, to enable access to various files of the vehicle data 310. In some cases, this index may include a directory of all root names and layer indicators, to facilitate easy access to files of vehicle data 310.

Builder 306 may also write the same or similar data to different layers for purposes of facilitating pre-processing, reprocessing, adding, providing output from a new intermediary (e.g., testing a new planning system, such as planning system 1228 described below, or other system of vehicle 318), grouping, or other operations on the data. These different layers are referred to herein as variant layers. These variant layers may be optimized for custom analytics or offline usage, as will be described in greater detail below.

In some aspects, builder 306 may store different files in different locations, to optimize various access requirements to the vehicle data 310. For example, the builder 306 may store some files of the vehicle data 310 to a local or readily accessible memory location or data store. This may be particularly useful for files that are accessed more frequently than other files. Similarly, builder 306 may store some files of vehicle data 310 in remote memory locations, to reduce costs and resources needed to store large amounts of vehicle data 310, for example. In some aspects, storing the files of vehicle data 310 in different locations may be further facilitated, or performed in whole or in part, by data storage service 314.

The data interface/reader 308 may read or access vehicle data 310 stored in data store 312. In some aspects reader 308 may access files in the data store according to a store location and a vehicle name. In some cases, reader 308 may facilitate running queries on the data stored in data store 312 and accessing specific files of vehicle data 310. Reader may receive information specifying what files to obtain, for example, via one or more interfaces provided by autonomous vehicle service 302. In some aspects, files of vehicle data may be located and retrieved via searching for ranges of data. A range may include a time-range, such as start and stop time values, or a duration of time with a starting or ending point. The range information may also include or be accompanied by a vehicle identifier and one or more topics.

In some aspects, reader 308 may receive instructions to query and obtain a certain set of files, for example, identified by a range, including time values, vehicle, and topics. In some aspects, the reader 308 may search an index of vehicle data 310, for example, maintained by the service 302, of stored data in data store 312, to identify a set of files corresponding to the range information. In this example, the index may include an inventory of what data is stored in the data store 312 according to the various layers in the hierarchical data structure, and/or locations in which the data is stored. In other cases, the data storage service 314 may identify the requested files based on the range information. In either case, the reader 308 or data storage service 314 may obtain the requested vehicle data 310 from data store 312. The reader 308 may then provide the requested files to the service 302 for responding to the initial request. In some aspects, at least a portion of the data in the selected files may be provided, for example, when the request or query specifies a subset of data that is contained in files selected to comply with the request. In some cases, messages within files obtained in response to the query may be provided in the order that they were recorded, for example, by a device or vehicle. This may include streaming or otherwise providing the messages in a file continuously, to reenact the recording the messages in the first instance (e.g., playback of the events that happened to the device or vehicle).

In some aspects, variant or alternative layers or may be created and stored back into the data structure 316. These variant layers may include combining files from different layers of the data structure, removing some files from a single layer, and other operations and modifications. Beneficially, variant layers may be read and written to by simply specifying a variant layer name in the read or write instructions (e.g., using a URL), without the need for other definitions or parameters.

In some examples, one or more files may be modified and stored back into data store 312 by builder 306, using a different variant layer identifier.

In some aspects, data structure 316, and data store 312, may support various programming languages, based primarily on the layer and file hierarchical structure (e.g., C++, Python, REST, etc.). Because there is a direct mapping from time, device (e.g., vehicle), and topic to files for efficiency, interfacing with data store 312 and data hierarchy 316 may be relatively easy to configure for multiple different languages, using different API calls, etc. In some examples, data structure 316 may be stored in data store 312 using various formats, including SSTable format, which may provide a well-tested API to further ensure efficient access to the data. In some cases, the data may be compressed when stored in hierarchy 316, which may improve communicating the data via limited bandwidth channels.

In some aspects, layers can be stored, accessed or recalled using a universal resource locator (URL) or other universal resource identifier (URI), which can specify topics, variants, times, etc. In this way, specific files, from specific time periods, generated by specific vehicles or devices may be easily and reading located and recalled. In some cases, the layer itself, or a layer which references another layer, may indicate which files topics, time, device, etc. that data stored in the layer relates to.

In some cases, if a request is received to access or recall one or more files using a time range, or start and end values of the files requests, and the times specified are between two time subdirectories, the reader may select the earliest file at the beginning and latest file at the end of the range to provide a more complete response to the request.

In some cases, service 302 may include a permissions manager 304, which may control access to various files of the vehicle data 310, for example, on a root level, variant layer level, topic level, time level, device identifier level, or a combination thereof. Permissions manager 304 may associate different permissions with different files to control what entity is allowed to access certain files of vehicle data 310. In some cases, the permissions manager 304 may group files by topic, vehicle, or different variant layer properties. The permissions manager 304 may then associate permissions to the different groups of data based on who is likely to need to access that specific subset of the vehicle data 310, or to restrict access to one or more groups or accounts. For example, a variant layer may define certain operations performed on the vehicle data (e.g., which could include a combination of different files or topics), indicative of one or more safety measures implemented on autonomous vehicle 318. It may be desirable to limit who can access the safety data, for example, if the data is confidential, or only a certain group would likely ever access the data.

The permissions manager 304 may associate one or more permissions with one or more files or layers, and communicate that information to builder 306 and/or data storage service 314 to effectuate limiting or controlling future access to the data.

In some aspects, the permissions manager 304 may have or provide an administrative interface to enable an administrator to define, configure, or select, certain permissions and associate those permissions with various groups of users, entities, IP addresses, or other characteristic. In some aspects, certain data may be associated with one or more variant layers to further enable more precise and granular access control to various data in the hierarchical data structure. For example, navigational control data may be generated by vehicle 318. The navigational control data may be split up and stored in different variant layers, to enable different groups to access different pieces of the navigational control data more efficiently. For example, one group may be responsible for monitoring and improving a tracking subsystem, such as tracking subsystem 1226 described below in reference to FIG. 12, and another may responsible for monitoring to make sure the perception and prediction subsystem 1212 is working properly, while yet another group may be responsible for making improvements to a drive controller 1270. The navigational control data may be split up according to what is useful to each group, and the relevant data for each associated with and stored in a different variant layer. Each variant layer may be associated with an access permission that specifies the users, group, or other identifying information in the form of credentials that are allowed to access the data in each of the variant layers.

The access permissions may enable various groups to efficiently access different subsets of the navigation control data by restricting access to data that is not relevant to the different groups. In some cases the access permissions may be used to keep certain groups or users from accessing sensitive data, such as to comply with one or more regulations or rules imposed by an external organization, for data privacy reasons, and so on.

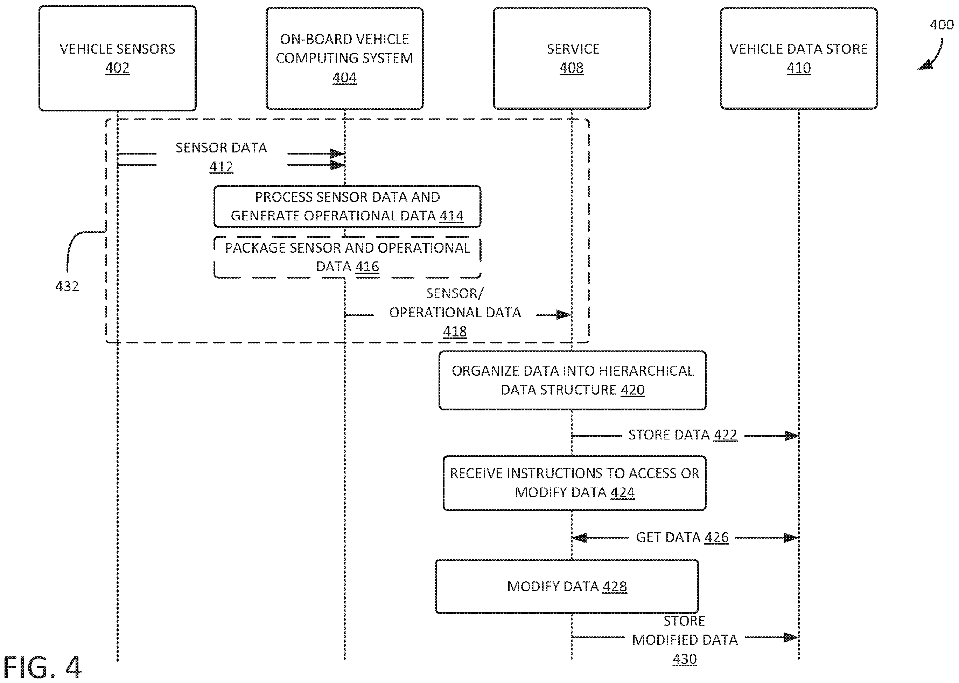

FIG. 4 illustrates example communications 400 between different aspects of an autonomous vehicle service and an autonomous vehicle, such as described above in reference to FIGS. 1 and 3. In some aspects, vehicle sensors 402 and/or on-board computing system 404 may be part of an autonomous or semi-autonomous vehicle, such as vehicle 106, 306, as described above in reference to FIGS. 1 and 3, and/or include one or more subsystems of vehicle 1200, described below in reference to FIG. 12. In addition, vehicle data store 410 may include one or more aspects of vehicle data store 104 and 312 described above in reference to FIGS. 1 and 3.

Vehicle sensors 402 may obtain various sensor data, as described below in more detail in reference to FIG. 12. The sensor data may be communicated to one or more on-board vehicle computing systems 404, at operation 412. In some cases, the vehicle sensors 402 may communicate sensor readings and data 412 to one or more computing systems of one or more vehicle subsystems, as described below in more detail in reference to FIG. 12. In either case, either a central on-board vehicle computing system 404 or one or more subsystems thereof, may process the sensor data at operation 414 in the course of operating the vehicle. Operation 414 may generate operational data in the form of multiple messages concerning the sensor data and various aspects of operation of the vehicle, for example, that may be communicated between various subsystems of the vehicle. In some aspects, the messages may include log data. As a non-limiting example, such onboard computing systems 404 may perform operations, such as detection, classification, segmentation of objects, localization of the vehicle with respect to a map, etc., based at least in part on sensor data from one or more sensors. Such detections, classification, segmentations, localization, predicted object motions, etc., may be output in the form of one or more messages. In turn, in such an example, other processes may consume such messages to create more messages (e.g., a planning system described below may create a message to be consumed by a vehicle controller based on the aforementioned message data). Of course, any number of components and subcomponents may transmit data between one another. In any such example, messages may have a corresponding time stamp as provided by a central time keeping server process.

In some aspects, the on-board vehicle computing system 404, or one or more computing systems of one or more subsystems of the vehicle, may package the sensor data and operational data into files, for example, according to a hierarchical data structure, as described above, at operation 416. In some aspects, operations 414 and/or 416 may include the computing system 404 collecting and recording messages generated from a number of subsystems of the autonomous vehicle. The computing system 404 may group the messages, which may include log data, into a number of different topics. The grouping may be performed in number of different ways, including, by subsystem that generated the messages, a task or process that was carried out, which may span one or more subsystems, by key words, or by other metrics or schemes. The message data may be broken up into time periods. In some aspects, the time period or window may be predefined, such as at one minute intervals, though any other time period is contemplated. In some cases, such time windows may be determined based on a frequency and amount of received data so as to ensure that the amount of data contained therein does not exceed a threshold data limit. One or more of operations 412, 414, 416, and/or 418 may be performed at various times, such as at regular intervals, at configurable and/or variable intervals, or upon the occurrence of one or more events. The one or more events may include on-vehicle events, such as triggered by one or more sensors or subsystems of the vehicle.

The on-board vehicle computing system 404 and/or other components of the autonomous vehicle may communicate the sensor and operational data to an autonomous vehicle service 408, at operation 418, for example, over one or more networks. In the cases where the vehicle computing system packages the data at operation 416, the data may be communicated to the autonomous vehicle in smaller files (e.g., with most being less than 1 MB, and some larger files up to approximately 70-100 MBs). In some aspects, packaging and communicating the data at 432, represented by operations 412, 414, 416, and 418, in smaller windows may reduce the stress on the on-board vehicle computing system 404 in the process of sending data to autonomous vehicle service 408. In some aspects, the files that are packaged at operation 416 may be small enough such that data buffers are not needed, or alternatively, not as many or as large of capacity data buffers may be used.

Upon receiving the sensor and operational data at operation 418, the autonomous vehicle service 408 may organize the data into a hierarchical data structure, at operation 420, and store the data at operation 422 in a vehicle data store 422. In some aspects, operation 420 may include associating files of the vehicle data, which may already be associated with a time value and a topic, with additional levels in a data hierarchy, such as a vehicle identifier, a root value, and/or one or more variant layers. A number of files of different topics may be grouped or organized into a subdirectory or layer, organized by a time value.

In some aspects, the autonomous vehicle service 408 may receive one or more instructions to access and/or modify some of the vehicle data, at operation 424. In some aspects, operation 422 may include receiving instruction to modify the data including to create a new subset of the data, represented by a variant layer having one or more characteristics of files or topics included therein, which may be changed or modified from the original data obtained. In response, the autonomous vehicle service 408 may request and get the data from vehicle data store 410, at operation 426. In some cases, the autonomous vehicle service 408 may modify the data according to the instructions received at operation 424, at operation 428, and store the modified data at operation 430 to the data store 410 in the hierarchical data structure. In this way, communications 400 may facilitate easy access to and manipulation of vehicle data.

In some aspects, the instructions to modify the data, received at operation 424, may include a number of different processes to be performed on the data, including adding or removing certain files form one or more subdirectories of the hierarchical data structure to create new subdirectories.

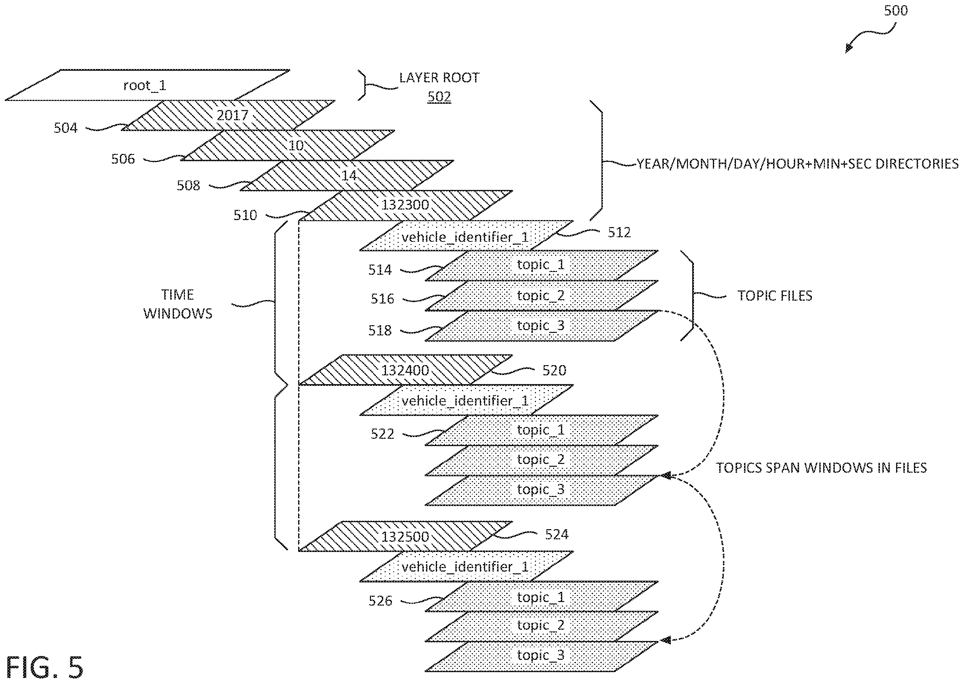

FIG. 5 illustrates an example of a file structure, which may be referred to as a subdirectory, tree, or layer 500 in a directory data structure, including a number of different data levels. The tree 500 may include various levels organized in a hierarchical manner, to more efficiently store data received from one or more devices, such as an autonomous or semi-autonomous vehicle. The tree structure 500 is described in relational terms, to facilitate understanding. It should be appreciated, that this is only given for purposes of explanation, and does not represent the form of how the data is physically stored.

The tree may have a root level 502, which specifies one or more attributes of the tree, including one or more access permission associated with the tree, a data storage or memory location of the tree, etc. As non-limiting examples, such a root level may specify that the data exists in a remote, cloud-based, server, locally, compressed, uncompressed, accessible via a particular protocol, or the like. Next, one or more levels may be included to a specific date and time the files of tree 500 pertains to. In the example illustrated, a first level 504 represents year, a next level 506 represents month, a next level 508 represents day, and a next level 510 represents hours, minutes, and seconds. Each of the time levels 504, 506, 508, and 510 may be extended to include any time period. As illustrated, each minute in time is represented by a new lowest level of time, 512, 520, 524, etc. It should be appreciated that other numbers of levels and other divisions of time can be similarly be used.

Below the time level or levels, a device identification level 512 may be included. As a non-limiting example, data generated and collected from a 5^{th} autonomous vehicle in a fleet of autonomous vehicles may specify such a level as, for example, "AV_5." A number of different topic files 514, 516, 518, etc. may be included under each time window per device. In the example illustrated, topic 1 514 is included in each of time levels 512, 520, and 524, as files 514, 522, and 526. In some examples, files representing the same topic may be included or present in different time intervals when data falling within those topics (e.g., one or more messages pertain to that topic) are generated by the vehicle, in the corresponding time interval.

Structuring the vehicle, or other device data, in this way may provide easy and efficient access to vehicle data on a granular level. In addition, this data structure supports a reader, such as reader 206 described above, reading from multiple layered roots. The same structure or format may be used across a number of trees to help provide more efficient access or recall of the data.

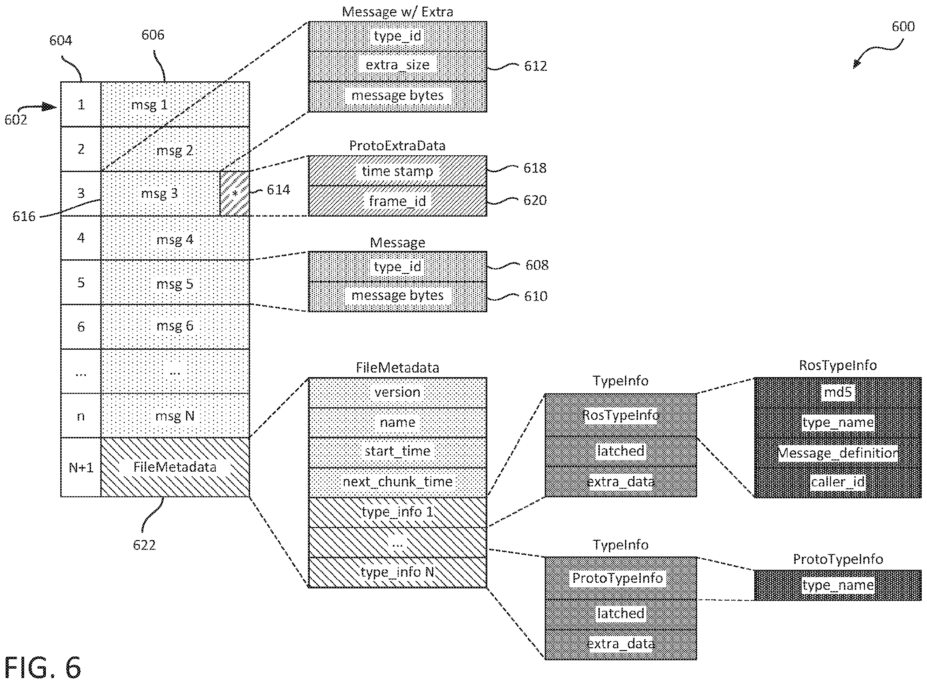

FIG. 6 illustrates an example of the contents of a file 600 of the directory data structure of FIG. 5. In one example, topic files 600 may be stored in a table format, such as Google LevelDB's SSTable format, though other formats are contemplated. Each row 602 in the table may include a message number 604/message 606 pair. In one example, the message numbers 604 may be sequential in time, such that 2 represents a time after 1, and so on. Messages can be in a number of different formats, such as ROS, protocol buffers, JSON, XML, or the like, and any topic can contain multiple message types. Each message 606 may include a type identifier 608, which may identify the type (e.g., ROS message, protocol buffer, etc.), origin, or one or more attributes of the contents of the message, and a data field 610. In some aspects, space may be reserved, by an extra size field 612, for another format or field of data 614 in the message, such as in message 616. In some aspects, the extra data 614 may include a time stamp 618 or other time identifier, where time may be in nanoseconds, reported in Unix time or UNIX Epcoh time, and a frame identifier 620, for example, to describe the source of the extra data.

In one example, one row (as illustrated the last row) in the file 600 may include a metadata record 622 that describes types and other meta things. As illustrated the metadata record 622 may include a variety of fields and pieces of information concerning the file 600, such as version, name, time information, and information pertaining to any data formats that are included in the file 600.

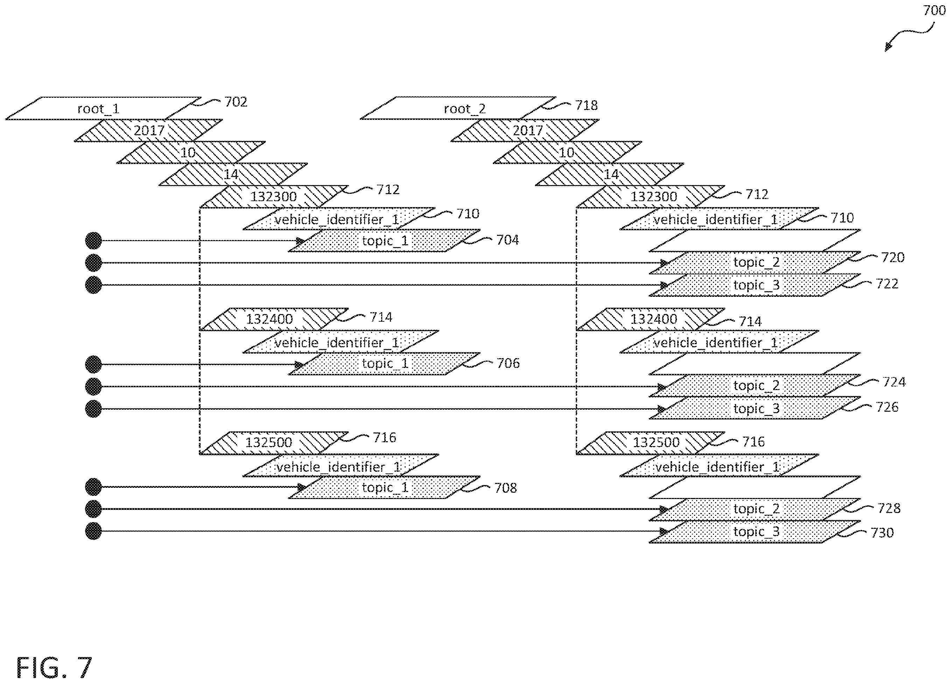

FIG. 7 illustrates an example 700 of two related but different file trees or subdirectories, of the directory data structure of FIG. 5. A first tree, 702, labeled root_1 includes files pertaining to topic_1 704, 706, 708, for a specific vehicle 710, at certain times 712, 714, 716. A second tree, 718, labeled root_2 may store files pertaining to topic_2 720, 724, and 728 and topic_3 722, 726, and 730 for time periods or windows 710, 714, and 716, for the same vehicle 710. In this way, files for different topics of a vehicle or other robotic device may be stored in separate trees or subdirectories.

The ability to store robotic or vehicle data in separate trees or subdirectories, according to a unified data hierarchy may be beneficial and allow efficient local caching of certain files that are accessed more frequently than others. It may also be beneficial to store certain topics in separate trees, for example, to facilitate contemporaneous access to different data, and for a number of other reasons. In some cases, storing different files for different topics in different tress may be used to associate different permission schemes to different data, for example, as described above in reference to permissions manager 204 of FIG. 2.

It should be appreciated that trees 702 and 718 may include any number of files for different topics, for a variant of lengths of time, and include different sized time windows.

In some aspects, the levels of data trees 702 and 718 may have a defined order, and for each file, the first file found is retrieved when requested. So, in the example illustrated, files for topic _1 are requested, files 704, 706, and 708 are retrieved, despite the fact that tree 2 718 may have corresponding data to topic _1, per this example access scheme.

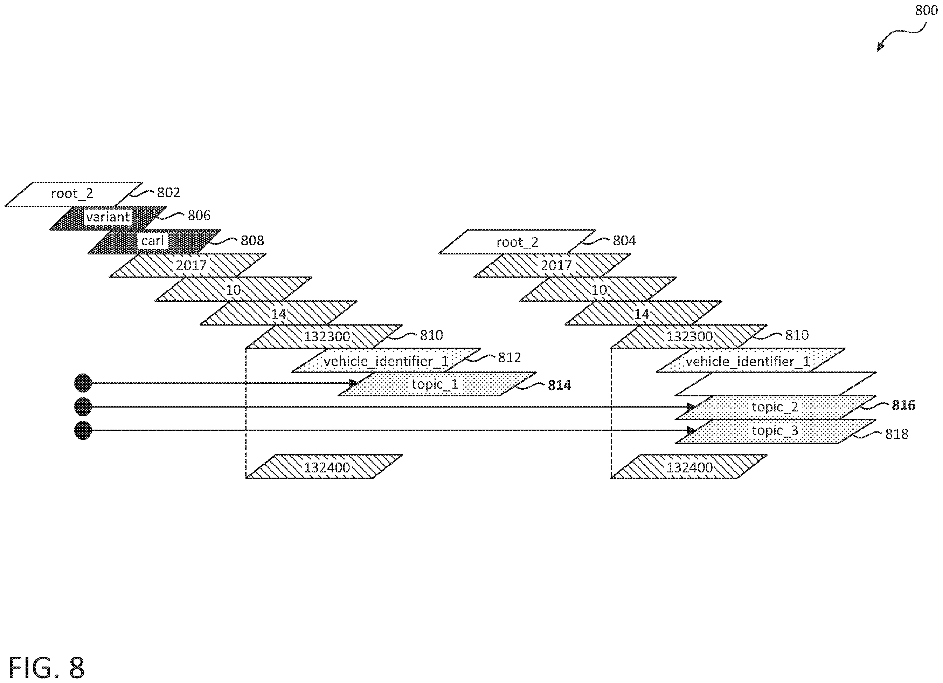

FIG. 8 illustrates another example 800 of two related but different file trees or data structures, of the directory data structure of FIG. 5. In the example of FIG. 8, two different trees, 802 and 804, each associated with root_2, are illustrated. Tree 802, includes file 814 associated with topic 1, for time period 810 and for vehicle 812. Tree 804 includes files 816 and 818 associated with topics 2 and 3, for time period 810 and for vehicle 812. Tree 802, has two additional levels 806, 808 specifying that the tree is associated with a variant layer. The variant layer identifiers 806 and 808 may be used to modify the files stored in a tree in one way or another and save the modified files, or different combination of files, or newly generated files, to a separately addressable tree. It should be appreciated that trees 802 and 804 may include any number of files for different topics, for a variant of lengths of time, and include different sized time windows. In some aspects, tree 804 may also store files 814 associated with topic 1, where access preference may be configured (e.g., access topic from tree 802, first, if not there, access from tree 804).

The hierarchical data structure or directory, described herein, in part through organizing files by topic, time, and vehicle, enables easy and efficient modification, reorganization, comparison, and additions to the data to be performed. Variant layers, or layers having customizable content in the form of different files, external data, data derived from other files, etc., can be easily created and accessed via the described directory. Variant layers may be created in a number of ways, including by combining files of different layers to form a new layer, via associating a variant layer identifier with the new layer. A layer may be formed by combining files of different topics aligned in time according to the hierarchical data structure. This may include combining files associated with different topics but a same time period or window into a layer having one or more time levels. In this way, data may be combined in almost endless ways, to enable quicker access to data that may be related, but come from different sources, such as different subsystems of an autonomous vehicle.

In another example, variant layers may be created by associating other data, including external data and/or other data related to a device. In some examples, data may be derived from data generated by the device and then combined with files stored in the hierarchical data structure. This may include accessing a first set of files of device data, abstracting or obtaining some subset of information contained in those files, and then combining that data with a second set of files of device data, and storing the newly generated set of data using a hierarchical data structure.

For example, a first set of files may include various sensor data and other messages and/or log data relating to a subsystem, such as sensor calibration subsystem 1230 described below in reference to FIG. 12. It may be desirable to extract some information from the data generated by that subsystem 1230 in order to associate the extracted information with data generated by another subsystem, such as road navigation system 1242. Data relating to a calibration of one or more sensors, such as camera, radar, lidar, and the like, or some other operational characteristic, may be particularly useful when compared, correlated in time, to certain navigational decisions made by the road navigation system 1242. In this scenario, files associated with the sensor calibration subsystem (e.g., a first topic) for a period of time and a specific vehicle, may accessed via a hierarchical data structure, as described herein. Characteristic information may be abstracted from some or all of the accessed files (e.g., if the data is contained in each of the files). Files associated with the road navigation system 1242 may also be accessed for the same period of time and the specific vehicle. The abstracted data may be organized into files and then combined with the accessed road navigation system files and stored in a new layer of the hierarchical data structure, for further analysis and use, etc.

In some examples, the abstracted data may be organized into new files, associated with a new topic and time values. These new files may then be combined with the files of the road navigational system files by associating the new files in different levels of the hierarchical data structure by aligning the two different sets of files according to time and vehicle identifier, for example, in a new or existing layer. By using the described hierarchical data structure, data from various subsystems of a vehicle or robotic device may be easily and efficiently combined and aligned in time.

In other examples, various types of information may be derived from data generated by a device or autonomous vehicle by calculating values or performing other operations on the data. These operations may include mathematical operations (calculating averages, acceleration, special relationships, etc.), Boolean operations, linguistic operations (associating certain key words with values or with other key words), and basically any defined operation using the underlying data in some way. In this respect, the described hierarchical data structure is a very powerful tool in analyzing, pre-processing, organizing and storing data for a wide range of analytics.

In some aspects, data obtained from a vehicle may be rolled up, such that a large amount of data may be reduced in size by extracting or modifying the underlying data for a specific purpose, and saved in a variant layer.

In other cases, data not generated by the device or vehicle, or data external to the device, may be combined in a similar way. For example, other data (e.g., external sensor data, weather data, traffic data, etc.) that may correspond to operation of the vehicle at certain times may be associated with the data generated by the vehicle to derive or infer the effects of environmental factors, for example, on the operation or functioning of one or more subsystems of the vehicle.

Similarly, variant layers may be generated by removing data, in the form of files of one or more topics, from an existing layer. This may be particularly beneficial where a topic typically contains a lot of data or files, but for some specific purpose, only a small subset of the data or files is needed. By creating a variant layer that only includes the relevant data, and for example, storing the variant layer in an easily accessible data storage location, the data may be access more quickly and using less resources (e.g., processing, memory, and network resource).

In some cases, variant layers may be used to provide a more customizable access scheme, where certain variant layers, having files of different topics, may be associated with access permissions grouped or defined by any number of different characteristics, including entities that would normally access certain data, sensitive data that only certain entities are allowed to see, to comply with data privacy concerns, and so on. In this way, access to various subdivisions of the data may be controlled in a very precise way.

In some examples uses of the describe data hierarchy, variant layers may be used to group data that is accessed more frequently than other data, and store it in a location that provides for quick access to the data. This both reduces the amount of quick access data storage needed, and also reduces time to access the data by minimizing the amount of data that has to be searched. Using variant layers in this way, to better organize data based on access, may also be used to optimize data storage costs, increase fault tolerance by duplicating data and storing in a second location, and so on.

In yet other examples, variant layers may be utilized to record and compare data generated by running simulations (or otherwise testing new algorithms, procedures, etc., on previously recorded data) of operation of the device or vehicle, or a subsystem thereof. For example, different inputs, and/or different algorithms may be used, in order to test new designs or account for different situations, environments, etc., in one or more subsystems of a device or vehicle. The output may be organized into a variant layer, and compared to data obtained from the device or vehicle using other inputs and/or other processing algorithms. As a non-limiting example, a new computer vision detector (process to identify objects in image data) may be run against previously recorded images obtained while driving the vehicle. In such an example, outputs from a first detector algorithm may be compared directly against detections from the original detector. In this way, variant layers may be used to test and efficiently compare results of various design changes that may be implemented in the device or vehicle, or one or more subsystem thereof. In a more specific example, one or more decision points, or algorithms used, in the planning subsystem 1228, of the vehicle 1200, discovered below in reference to FIG. 12, may advantageously be tested, and the result output to one or more variant layers. These new variant layers may then be efficiently compared to existing layers output from planning subsystem 1228 using other decision points or algorithms, to help improve these decision points or algorithms, and optimize performance of the subsystem 1228 and/or vehicle 1200. This use of variant layers may be particularly useful to test new design features, code for executing one or more aspects of one or various subsystems of the vehicle, new or changes to existing algorithms for making decisions for operating the vehicle, etc. In some cases, data may be derived from the vehicle generated data, modified (e.g., one or more operations performed on it), and then stored in a variant layer to enable comparing derived metrics or data.

In another example, one or more variant layers may be used to store specific senor and other data, that may be useful to a third party. In this case, the camera or other sensor 1250 data may be easily retrieved and stored in a new variant layer or layers, for efficient access to only pertinent data by such necessary third parties. Similarly, other data not necessary (e.g., decision messages and the like) may not be accessible to such third parties, as it may contain proprietary information. In other cases, the data may be written directly to a new variant layer.

In another example, one or more components may be replaced or added to the vehicle, such as one or more detectors, sensors, etc. By storing the new data obtained from the replaced or new component in one or more variant layers, the performance of the new component may be accessed and easily compared to the old component (e.g., stored in another layer), to aid in modifying tor optimizing performance of the vehicle or device.

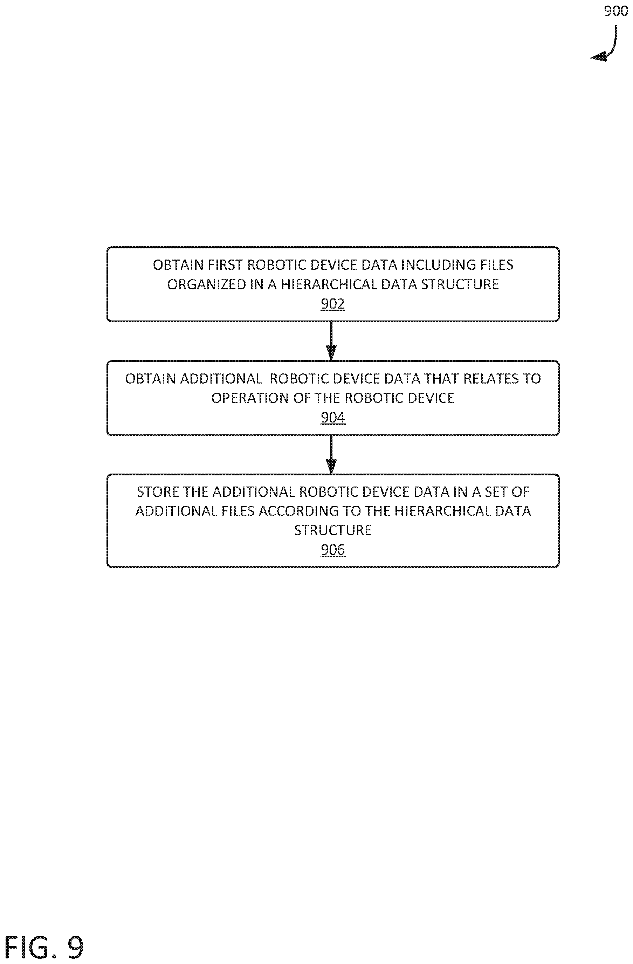

FIG. 9 illustrates an example process 900 for accessing and storing robotic device data in a hierarchical data structure. Process 900 may be performed, for example, by a robotic device or autonomous vehicle, or subsystem thereof, such as on-board vehicle computing system 404, as described above in reference to FIG. 4. In other examples, process 900 may be performed by a robotic device or autonomous vehicle service, such as services 102, 302 described above in reference to FIGS. 1 and 3. In yet some cases, different operations of process 900 may be performed by either of a robotic device or a service.

Process may begin at operation 902, in which first robotic device data including a plurality of files organized in a hierarchical data structure may be obtained. In some cases, each file of the plurality of files is based on at least one respective message generated by a robotic device. In yet some cases, the files may be sequential files, and/or associated with a first topic and first time values. In some cases, a robotic device service may obtain the first robotic device data. The service may also obtain additional robotic device data that relates to operation of the robotic vehicle, at operation 904.

The service may store the additional robotic device data in a set of additional files according to the hierarchical data structure, at operation 906. In some aspects, the additional robotic device data may include at least one of a second set of files organized in the hierarchical data structure, data derived from files stored in the hierarchical data structure, or data external to the robotic device, as described in greater detail above in reference to FIG. 8. In some aspects, storing the additional robotic information may include combining it with some or all of the files of the first robotic data. In yet other examples, the additional robotic device data may be appended or added to the first robotic device data, such as after files of the first robotic device data, in new time levels. In some aspects, the plurality of files of the first robotic device data may be organized in a first layer, and the set of additional files may be written to a new variant layer.

In some aspects, the first files may be combined with the additional files by organizing the first and additional files in a layer according to time values associated with the respective files. In some aspects, the time values of the different files may partially or fully overlap, such that one or more files from the first group of files may be stored in the same time level as one or more files from the offset of additional files.

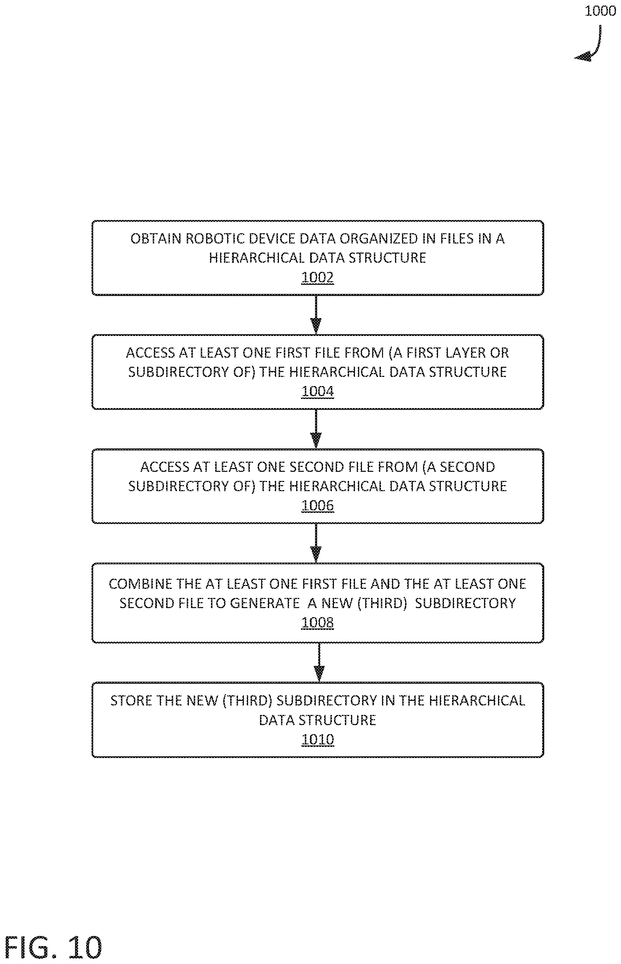

FIG. 10 illustrates an example process 1000 for accessing and combining robotic device data using a hierarchical data structure. Process 1000 may be performed, for example, by a robotic device or autonomous vehicle, or subsystem thereof, such as on-board vehicle computing system 404, as described above in reference to FIG. 4. In other examples, process 1000 may be performed by a robotic device or autonomous vehicle service, such as services 102, 302 described above in reference to FIGS. 1 and 3. In yet some cases, different operations of process1000 may be performed by either of a robotic device or a service.

Process 1000 may begin with operation 1002, in which robotic device data, organized in files in a hierarchical data structure, as described throughout, may be obtained. The robotic device data may be obtained from a robotic device or autonomous vehicle 106, 318, or a corresponding service 102, 302, as described in greater detail above in reference to FIGS. 1 and 3. At least one first file from a subdirectory or layer of the hierarchical data structure may be accessed, at operation 1004, for example, in response to a request to access the data received by the autonomous vehicle service 102, 302 or reader 308. Similarly, at operation 1006, at least one second file from a second subdirectory or layer of the hierarchical data structure may be accessed.

Next, at least one first file and at least one second file may be combined to generate a new or third subdirectory or layer, at operation 1008. The third layer may be stored in the hierarchical data structure, at operation 1010. In some aspects, operations 1008 and 1010 may be performed by autonomous vehicle service 102, 302 or builder 306.

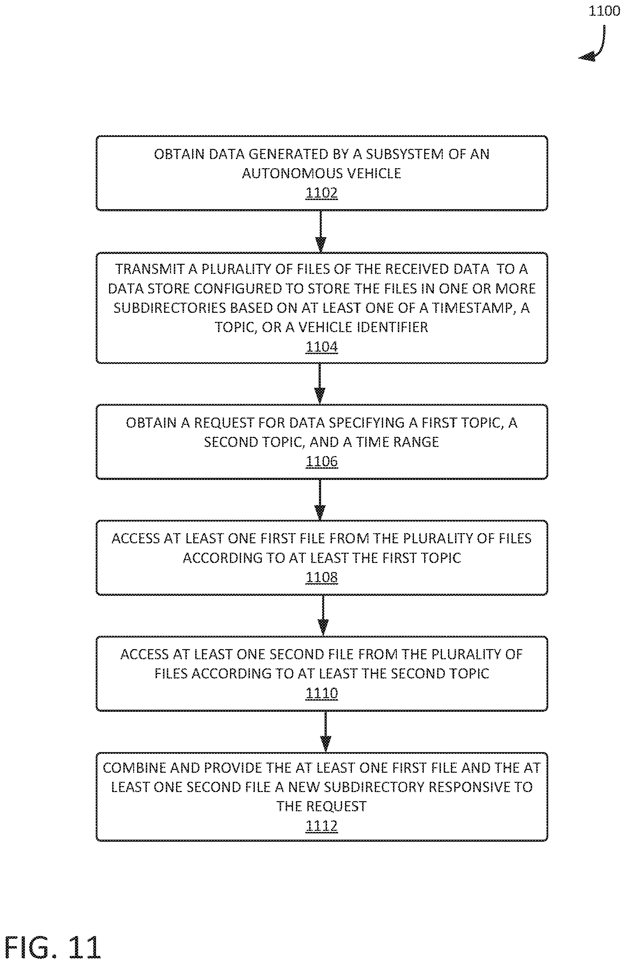

FIG. 11 illustrates an example process 1100 for receiving, storing, accessing and combining autonomous vehicle data using a hierarchical data structure. Process 1100 may be performed, for example, by an autonomous vehicle service, such as services 102, 302 described above in reference to FIGS. 1 and 3.

Process 1100 may begin at operation 1102, in which data generated by one or more subsystems of an autonomous vehicle, a timestamp, and a topic may be obtained or received from an autonomous vehicle, by an autonomous vehicle service, such as service 102, 302. Next, at operation 1104, a portion of the data, including multiple files, may be sent to one or more data stores, such as data store 104 or 312 of data storage service 314. The one or more data stores may be configured to store the files in one or more subdirectories or layers, for example of a hierarchical data structure or directory 316, based at least in part on the timestamp, the topic, or an identifier of the autonomous vehicle.

A request for data, such as including a first topic, a second topic, a start time, and an end time, or time range, may be received, at operation 1106, for example, by an autonomous vehicle service. Responsive to the request, at least one first file may be accessed according to at least the first topic, and in some cases, according to the specified time range, at operation 1108. Similarly, at least one second file may be accessed according to at least the second topic, and in some cases, according to the specified time range, at operation 1110. The at least one first file and the at least one second file may then be combined in a new layer or subdirectory, at operation 1112, and provided in response to the request. In some aspects the new layer or subdirectory may be stored using the hierarchical data structure, as described throughout this disclosure.

In some aspects, the request or account associated with the request may be associated with a first permission level. In some cases, the service, such as service 302 and/or permissions manager 304, may determine whether the permission level associated with the request meets or exceeds a permission level associated with one or more of the files requested. In the event a permission leveled associated with a file, topic, level, root, or layer, specified in the request is higher than a permission level of the request the service may deny access to the one or more files, levels, subdirectories, etc. As further examples, different variant layers may be restricted to different teams and/or groups of users. As non-limiting examples, certain sensor data may be made available to software developers, while information regarding (for example) personal identifiable information may not be. As such, different groups of users may have access (according to permissions set on differing variant layers). In at least some examples, a profile may be associated with the one or more computing systems. Such profiles may determine any one or more of users who may have access to differing variant layers, and/or a preferred order in which to retrieve data. As a non-limiting example, a profile may specify to prefer data of variant "A" over variant "B." In such an example, when data is requested from multiple sources (e.g., both variant layers "A" and "B"), a request for a topic available on both will retrieve data in the order of preference and according to the permission sets indicated in the profile.

FIG. 12 illustrates an example of elements that might be used according to an architecture 1200 of an autonomous vehicle. The autonomous vehicle might be characterized as having an autonomous vehicle operation system 1202, coupled to various controllers, which in turn are coupled to various components of the autonomous vehicle to handle locomotion, power management, etc. Elements of the autonomous vehicle operation system 1202 provide for a computational system for implementing object identification and environment analysis, as described herein. These elements might find use in other applications outside of autonomous vehicles.

The architecture 1200 may specify one or more computer system(s) including various hardware, software, firmware, etc., to implement aspects of the systems, methods, and apparatuses described herein. For example, the autonomous vehicle operation system 1202 may include a surroundings analysis system 1203 and other components usable for various aspects of an autonomous vehicle. The surroundings analysis system 1203 might be used to take in information that the autonomous vehicle operation system 1202 might use to operate controllers for a motor, steering, object avoidance, etc.

The surroundings analysis system 1203 might be organized as a plurality of subsystems to simplify implementation. In some examples, the subsystems are implemented independently, while in other examples, more than one subsystem are integrated together in part or in full. The subsystems might include a LIDAR subsystem, a camera subsystem, a radar subsystem, a sonar subsystem, a perception and prediction subsystem 1212, a localization and mapping subsystem 1214, a tracking subsystem 1226, a planning subsystem 1228, a sensor calibration subsystem 1230, and possibly other subsystems 1234. The perception and prediction subsystem 1212 performs object detection, segmentation, and classification of objects from sensor data of various types including LIDAR, radar, and visual images.

A given subsystem might be implemented with program code or hardware for communicating with other subsystems, to receive inputs and provide outputs. Some of the inputs might be from sensors. In some description herein, for readability, a subsystem might be described as including sensors from which the subsystem obtains data or signals and/or emitters to which the subsystem outputs data or signals. For example, a sonar subsystem might be described as having an ultrasonic sensor or might be described as receiving signals from an ultrasonic sensor. As another example, a camera subsystem might be described has having a camera and a display or might be described as receiving signals or data from a camera and sending signals or data to a display.

Although not shown in FIG. 12, it should be understood that communication among subsystems can be provided for as needed. A given subsystem might communicate with another subsystem by sending data over some channel directly to the other subsystem, or the surroundings analysis system 1203 might comprise a bus subsystem or communication infrastructure over which subsystems can communicate by passing data and/or signals there between. The surroundings analysis system 1203 might also be configured to receive external data and to communicate information to outside the surroundings analysis system 1203.

A given subsystem might have some of its own computational processing, which might be performed by hardware dedicated to that given subsystem or might be performed by a processor or circuit assigned to perform computation of that subsystem, as might be the case where the subsystem is implemented entirely in software and is executed by one or more processor(s) 1236 using a memory 1238, such as a program code memory and data storage memory. The memory might be for temporary storage of variables and data, such as RAM, and memory for permanent storage (i.e., data that persists without needing refresh, power, etc., for some period of life), and should be implied where indicated even if not explicitly mentioned. For example, where a subsystem is described as operating on a database or storing data, there would be some form of memory for storing data in electronically readable form. In some cases, the database or data storage in memory is not specific and internal to one subsystem. In those cases, the memory is accessible by more than one subsystem. For example, one subsystem might create records based on sensor data obtained by that subsystem and write those records to a database or other data structure and, in turn, another subsystem can read and use that data. Where a subsystem is implemented in software, the subsystem might include program code coupled to a processor specific to that subsystem or a more general program code memory and processor.

In some instances, the surroundings analysis system 1203 is employed in an autonomous vehicle. In some instances, the surroundings analysis system 1203 may provide perception and planning functionality for the autonomous vehicle. In general, the surroundings analysis system 1203 may provide for LIDAR perception, radar perception, vision (camera) perception, acoustic perception, segmentation and classification, tracking and fusion, and prediction/planning, as well as interfacing to other controllers, such as a drive controller, a power controller, an environmental controller, and a communications controller.

The autonomous vehicle operation system 1202 may include a road navigation system 1242, a manifest manager 1244, and an audit/fault logger 1246. The autonomous vehicle operation system 1202 might also include, or interface to, various sensors 1250 and emitters 1252.

The autonomous vehicle operation system 1202 might interface to a drive controller 1270 that interacts with motors 1280, steering 1282, brakes 1284, and a suspension 1286, a power controller 1272 that interacts with a battery 1288 and an inverter/charger 1290, an environmental controller 1274 that interacts with heating, venting, air conditioning (HVAC) components 1292 and lighting 1294, and a communications controller 1276 that handles communications between the autonomous vehicle, devices in use with the autonomous vehicle, and external devices, such as via a network, a cellular channel, or a Wi-Fi channel 1296. A combination of autonomous vehicle operation system 1202, the controllers, and the vehicle components installed in an autonomous vehicle can provide for a vehicle that is able to navigate safely without constant human intervention.

The autonomous vehicle operation system 1202 may include any number or type of sensors suitable for use in an autonomous vehicle beyond those illustrated. The various sensors 1250 may include, but are not limited to, ultrasonic transducers, wheel encoders, environmental sensors, microphones, inertial measurement unit(s) (IMU), accelerometers, gyroscopes, magnetometers, temperature sensors, humidity sensors, light sensors, global positioning system (GPS) sensors, pressure sensors, location sensors, etc.

A LIDAR subsystem may include one or more LIDAR sensors to capture LIDAR data for segmentation, as described herein, and may comprise any one or more depth sensors as described in detail herein. In some instances, the LIDAR subsystem 1204 may include functionality to combine or synthesize LIDAR data from a plurality of LIDAR sensors to generate a meta spin of LIDAR data, which may refer to LIDAR data based on multiple LIDAR sensors. In the case of a meta spin of LIDAR data, the LIDAR subsystem may include functionality to determine a virtual origin of the meta spin data (e.g., a coordinate reference frame common to all LIDAR sensors) and perform a data transformation such that LIDAR data from each of the one or more LIDAR sensors is expressed with respect to the virtual origin. As may be understood in the context of this disclosure, the LIDAR subsystem may capture data and may transmit datasets to other subsystems for subsequent processing.

A camera subsystem may include, or interface to, one or more camera sensors to capture vision data for image segmentation and/or classification. The camera subsystem may include any number and type of camera sensors. For example, the camera subsystem may include any color cameras, monochrome cameras, depth cameras, RGB-D cameras, stereo cameras, infrared (IR) cameras, ultraviolet (UV) cameras, etc. As may be understood in the context of this disclosure, the camera subsystem may capture data and may transmit datasets to the other subsystems for subsequent processing. For example, data from the camera subsystem may be included as one or more channels of a multi-channel image that is processed as such by another subsystem.

A radar subsystem may include one or more radar sensors to capture range, angle, and/or velocity of objects in an environment. As may be understood in the context of this disclosure, the radar subsystem may capture data and may transmit datasets to other subsystems for subsequent processing. For example, data from the radar subsystem may be included as one or more channels of a multi-channel image provided to another subsystem.

A sonar subsystem may include, or interface to, one or more speakers or sound emitters and one or more microphones (such as a microphone array) to capture acoustic information from objects in an environment. Additionally, or in the alternative, such a sonar subsystem may comprise various ultrasonic transducers. For example, the sonar subsystem may cause an ultrasonic transducer to emit pulses of sound and may listen for echoes to determine a position and/or motion information associated with objects in the environment. As may be understood in the context of this disclosure, the sonar subsystem may capture data and may transmit datasets to the other subsystems for subsequent processing. For example, another subsystem can fuse data obtained from the sonar subsystem with data obtained from the LIDAR subsystem, in order to more accurately segment objects and/or to determine information about the objects, or for other purposes.

In some instances, the LIDAR subsystem, the camera subsystem, the radar subsystem, and/or the sonar subsystem may provide one or more datasets for other subsystems of the surroundings analysis system for combining and/or synthesizing the data.

The surroundings analysis system 1203 may further include storage for simulated data that has been generated by a computer simulation algorithm, for use in part in testing. In some instances, the simulated data may include any type of simulated data, such as camera data, LIDAR data, radar data, sonar data, inertial data, GPS data, etc. In some instances, surroundings analysis system 1203 can modify, transform, and/or perform the converting operations described herein on the simulated data for verifying an operation and/or for training machine learning algorithms, as described herein. For example, to test some functionality in a laboratory setting, simulated sensor data/signals might be supplied to subsystems as if it were actual sensor data, to test performance of some subsystems. In some implementations, simulated data can include messages, events, and system alerts that are sent to the autonomous vehicle operation system 1202.

The localization and mapping subsystem 1214 may include functionality to convert or map data to a voxel map. For example, the localization and mapping subsystem 1214 can receive LIDAR data, camera data, radar data, sonar data, etc., and map, convert, or associate individual data points to a voxel map representing a three-dimensional space in an environment. A voxel space is a logical representation of a three-dimensional environment, such as the space surrounding an autonomous vehicle, that is represented as discrete small volumes, e.g., voxels. A voxel map provides data or values for respective voxels in the voxel space. As a representation of the three-dimensional environment, the voxel map can be stored in memory and manipulated by a processor.

In some instances, the localization and mapping subsystem 1214 can define dimensions of a voxel space, including a length, width, and height of the voxel space. Further, the localization and mapping subsystem 1214 may determine a size of individual voxels. In some instances, voxels may be a uniform size and shape throughout the voxel space, while in some instances, a size and/or density of voxels may vary based on a relative location in the voxel space. For example, a size of a voxel may increase or decrease in proportion to a distance of the voxel from an origin or center of the voxel space. Additionally, or in the alternative, such a localization and mapping subsystem 1214 may comprise a transformation between a virtual origin and an origin of the voxel space. In some instances, the localization and mapping subsystem 1214 may include functionality to generate a sparse voxel space wherein voxels that do not include data, or that include an amount of data below a data threshold, need not be present in the voxel map and the values of those voxels can be assumed or ignored. In such an instance, the voxel map may be organized as an octomap, a voxel hashing, or the like. In some instances, the localization and mapping subsystem 1214 may include functionality to reduce an amount of noise in the data of a voxel map or the data used to generate the voxel map by filtering data as it is mapped to the voxel space and stored in the voxel map. For example, filtering may include removing data below a threshold amount of data per voxel (e.g., a number of LIDAR data points associated with a voxel) or over a predetermined number of voxels (e.g., a number of LIDAR data points associated with a number of proximate voxels). In some instances, the localization and mapping subsystem 1214 can update a voxel map as data is gathered over time, and /or in response to an autonomous vehicle navigating within the real-world environment to which the voxel space corresponds. For example, the localization and mapping subsystem 1214 may add data and/or discard data from the voxel map as an autonomous vehicle navigates in an environment.

In some instances, the localization and mapping subsystem 1214 can initialize the voxel map, and other voxel space parameters, such as voxel size, orientation, and extent, treating the initial voxel map as representing empty space and the localization and mapping subsystem 1214 can build up representations of objects as LIDAR data is captured over time. In other instances, the localization and mapping subsystem 1214 can initialize the voxel map and voxel space parameters using global map data.

The tracking subsystem 1226 may include functionality to receive an indication of one or more dynamic objects and perform additional processing in order to track the objects. For example, the tracking subsystem 1226 may determine a velocity of a dynamic object and/or may determine and store a trajectory of the dynamic object over time. In some instances, the tracking subsystem 1226 may be programmed to perform a prediction algorithm that may predict a path of the object to be tracked based on previous motion of the object. In various examples, the tracking subsystem 1226 performs data association that one object is the same as a previously detected object. In some examples, the tracking subsystem maintains extents, computes velocities, and determines orientations of object.

The planning subsystem 1228 may include functionality to receive segmented data and/or indications of the ground plane, static objects, and/or dynamic objects to determine a trajectory of an autonomous vehicle. For example, the planning subsystem 1228 may receive segmentation information identifying the ground plane and may generate a trajectory for the autonomous vehicle to follow.

The sensor calibration subsystem 1230 may include functionality to calibrate one or more sensors 1250 based at least in part on the segmentation information determined with respect to an environment. For example, while sensor data from the LIDAR, camera, radar, and/or sonar sensors or subsystems may be used to estimate a location and/or orientation (e.g., using simultaneous localization and mapping (SLAM)), an autonomous vehicle may also include additional sensors, such as an inertial measurement unit (IMU) and/or a GPS unit, for determining a location of the autonomous vehicle in an environment. In some instances, the IMU may indicate that the autonomous vehicle is in a first location, while an analysis of the LIDAR data discussed herein indicates that the vehicle is in a second location different from the first location. The sensor calibration subsystem 1230 may determine a difference in the locations and may adjust or calibrate one more sensors to update a location of the autonomous vehicle or one or more sensor intrinsic characteristics or extrinsic characteristics.

For example, characteristics of a camera sensor may include focal length, image center, distortion parameters, shutter speed, resolution, and spectrum. Characteristics of a radar may include output power and input sensitivity. Characteristics of a LIDAR sensor may include resolution and sampling rate. An exemplary neural network might pass input data through a series of connected layers to produce an output. One example of a neural network may include a convolutional neural network, or CNN. Each layer in a CNN may also comprise another CNN, or may comprise a number of layers. As may be understood in the context of this disclosure, a neural network may utilize machine learning, which may refer to a broad class of such algorithms in which an output is generated based on learned parameters.

Although discussed in the context of neural networks, many types of machine learning may be used consistent with this disclosure. For example, machine learning algorithms may include, but are not limited to, regression algorithms (e.g., ordinary least squares regression (OLSR), linear regression, logistic regression, stepwise regression, multivariate adaptive regression splines (MARS), locally estimated scatterplot smoothing (LOESS)), instance-based algorithms (e.g., ridge regression, least absolute shrinkage and selection operator (LASSO), elastic net, least-angle regression (LARS)), decisions tree algorithms (e.g., classification and regression tree (CART), iterative dichotomiser 3 (ID3), Chi-squared automatic interaction detection (CHAID), decision stump, conditional decision trees), Bayesian algorithms (e.g., naive Bayes, Gaussian naive Bayes, multinomial naive Bayes, average one-dependence estimators (AODE), Bayesian belief network (BNN), Bayesian networks), clustering algorithms (e.g., k-means, k-medians, expectation maximization (EM), hierarchical clustering), association rule learning algorithms (e.g., perceptron, back-propagation, Hopfield network, Radial Basis Function Network (RBFN)), deep learning algorithms (e.g., Deep Boltzmann Machine (DBM), Deep Belief Networks (DBN), Convolutional Neural Network (CNN), Stacked Auto-Encoders), dimensionality reduction algorithms (e.g., Principal Component Analysis (PCA), Principal Component Regression (PCR), Partial Least Squares Regression (PLSR), Sammon Mapping, Multidimensional Scaling (MDS), Projection Pursuit, Linear Discriminant Analysis (LDA), Mixture Discriminant Analysis (MDA), Quadratic Discriminant Analysis (QDA), Flexible Discriminant Analysis (FDA)), ensemble algorithms (e.g., Boosting, Bootstrapped Aggregation (Bagging), AdaBoost, Stacked Generalization (blending), Gradient Boosting Machines (GBM), Gradient Boosted Regression Trees (GBRT), Random Forest), SVM (support vector machine), supervised learning, unsupervised learning, semi-supervised learning, etc.

The environment depicted in FIG. 12 might be implemented with one or more computer systems that comprise storage, one or more processor(s), memory, and possibly an operating system.

The systems and methods described herein can be implemented in software or hardware or any combination thereof. The systems and methods described herein can be implemented using one or more computing devices which may or may not be physically or logically separate from each other. The methods may be performed by components arranged as either on-premise hardware, on-premise virtual systems, or hosted-private instances. Additionally, various aspects of the methods described herein may be combined or merged into other functions.

An exemplary environment and computerized system for implementing the systems and methods might include a processor or computer system that can be configured to particularly perform some or all of the methods described herein. In some examples, the methods can be partially or fully automated by one or more computers or processors. The systems and methods described herein may be implemented using a combination of any of hardware, firmware, and/or software. The present systems and methods described herein (or any part(s) or function(s) thereof) may be implemented using hardware, software, firmware, or a combination thereof and may be implemented in one or more computer systems or other processing systems. In some examples, the illustrated system elements could be combined into a single hardware device or separated into multiple hardware devices. If multiple hardware devices are used, the hardware devices could be physically located proximate to or remotely from each other. The examples of the methods described and illustrated are intended to be illustrative and not to be limiting. For example, some or all of the steps of the methods can be combined, rearranged, and/or omitted in different examples.

In one example, the systems and methods described herein may be directed toward one or more computer systems capable of carrying out the functionality described herein. Example computing devices may be, but are not limited to, a personal computer (PC) system running any operating system such as, but not limited to, OS X^{™}, iOS^{™}, Linux^{™}, Android^{™}, and Microsoft^{™} Windows^{™}. However, the systems and methods described herein may not be limited to these platforms. Instead, the systems and methods described herein may be implemented on any appropriate computer system running any appropriate operating system. Other components of the systems and methods described herein, such as, but not limited to, a computing device, a communications device, mobile phone, a smartphone, a telephony device, a telephone, a personal digital assistant (PDA), a personal computer (PC), a handheld PC, an interactive television (iTV), a digital video recorder (DVD), client workstations, thin clients, thick clients, proxy servers, network communication servers, remote access devices, client computers, server computers, routers, web servers, data, media, audio, video, telephony or streaming technology servers, etc., may also be implemented using a computing device. Services may be provided on demand using, e.g., but not limited to, an interactive television (iTV), a video on demand system (VOD), and via a digital video recorder (DVR), or other on demand viewing system.

The system may include one or more processors. The processor(s) may be connected to a communication infrastructure, such as but not limited to, a communications bus, cross-over bar, or network, etc. The processes and processors need not be located at the same physical locations. In other words, processes can be executed at one or more geographically distant processors over, for example, a LAN or WAN connection. Computing devices may include a display interface that may forward graphics, text, and other data from the communication infrastructure for display on a display unit.

The computer system may also include, but is not limited to, a main memory, random access memory (RAM), and a secondary memory, etc. The secondary memory may include, for example, a hard disk drive and/or a removable storage drive, such as a compact disc drive CD-ROM, etc. The removable storage drive may read from and/or be written to a removable storage unit. As may be appreciated, the removable storage unit may include a computer -usable storage medium having stored therein computer software and/or data. In some examples, a machine-accessible medium may refer to any storage device used for storing data accessible by a computer. Examples of a machine-accessible medium may include, e.g., but are not limited to a magnetic hard disk; a floppy disk; an optical disk, like a compact disc read-only memory (CD-ROM) or a digital versatile disc (DVD); a magnetic tape; and/or a memory chip, etc.

The processor may also include, or be operatively coupled to communicate with, one or more data storage devices for storing data. Such data storage devices can include, as non-limiting examples, magnetic disks (including internal hard disks and removable disks), magneto-optical disks, optical disks, read-only memory, random access memory, and/or flash storage. Storage devices suitable for tangibly embodying computer program instructions and data can also include all forms of non-volatile memory, including, for example, semiconductor memory devices, such as EPROM, EEPROM, and flash memory devices; magnetic disks such as internal hard disks and removable disks; magneto-optical disks; and CD-ROM and DVD-ROM discs. The processor and the memory can be supplemented by, or incorporated in, ASICs (application-specific integrated circuits), or FPGAs (field programmable gate arrays).

The processing system can be in communication with a computerized data storage system. The data storage system can include a non-relational or relational data store, such as a MySQL^{™} or other relational database. Other physical and logical database types could be used. The data store may be a database server, such as Microsoft SQL Server^{™}, Oracle^{™}, IBM DB2^{™}, SQLITE^{™}, or any other database software, relational or otherwise. The data store may store the information identifying syntactical tags and any information required to operate on syntactical tags. In some examples, the processing system may use object-oriented programming and may store data in objects. In these examples, the processing system may use an object-relational mapper (ORM) to store the data objects in a relational database. The systems and methods described herein can be implemented using any number of physical data models. In one example, a relational database management system (RDBMS) can be used. In those examples, tables in the RDBMS can include columns that represent coordinates. The tables can have pre-defined relationships between them. The tables can also have adjuncts associated with the coordinates.

In alternative examples, secondary memory may include other similar devices for allowing computer programs or other instructions to be loaded into a computer system. Such devices may include, for example, a removable storage unit and an interface. Examples of such may include a program cartridge and cartridge interface (such as, e.g., but not limited to, those found in video game devices), a removable memory chip (such as, e.g., but not limited to, an erasable programmable read -only memory (EPROM), or programmable read -only memory (PROM) and associated socket), and other removable storage units and interfaces, which may allow software and data to be transferred from the removable storage unit to computer system.

The computing device may also include an input device such as, but not limited to, a voice input device, such as a microphone, touch screens, gesture -recognition devices, such as cameras, other natural user interfaces, a mouse or other pointing device such as a digitizer, and a keyboard or other data entry device. The computing device may also include output devices, such as but not limited to, a display, and a display interface. The computing device may include input/output (I/O) devices such as, but not limited to, a communications interface, cable and communications path, etc. These devices may include, but are not limited to, a network interface card, and modems. Communications interface(s) may allow software and data to be transferred between a computer system and one or more external devices.

In one or more examples, the computing device may be operatively coupled to an automotive system. Such automotive system may be either manually operated, semi-autonomous, or fully autonomous. In such an example, input and output devices may include one or more image -capture devices, controllers, microcontrollers, and/or other processors to control automotive functions such as, but not limited to, acceleration, braking, and steering. Further, communication infrastructure in such examples may also include a Controller Area Network (CAN) bus.

In one or more examples, the computing device may be operatively coupled to any machine-based vision system. For example, such machine -based vision systems include but are not limited to manually operated, semi-autonomous, or fully autonomous industrial or agricultural robots, household robots, inspection systems, security systems, etc. That is, the examples described herein are not limited to one particular context and may be applicable to any application utilizing machine vision.

In one or more examples, the present examples can be practiced in the environment of a computer network or networks. The network can include a private network, or a public network (for example the Internet, as described below), or a combination of both. The network may include hardware, software, or a combination of both.

From a telecommunications-oriented view, the network can be described as a set of hardware nodes interconnected by a communications facility, with one or more processes (hardware, software, or a combination thereof) functioning at each such node. The processes can inter-communicate and exchange information with one another via communication pathways between them using interprocess communication pathways. On these pathways, appropriate communications protocols are used. Operational commands (teleoperations) may be received by the system via cellular, infrared, radio, or wireless networking.

An exemplary computer and/or telecommunications network environment in accordance with the present examples may include nodes, which may include hardware, software, or a combination of hardware and software. The nodes may be interconnected via a communications network. Each node may include one or more processes, executable by processors incorporated into the nodes. A single process may be run by multiple processors, or multiple processes may be run by a single processor, for example. Additionally, each of the nodes may provide an interface point between the network and the outside world, and may incorporate a collection of sub-networks.

In an example, the processes may communicate with one another through interprocess communication pathways supporting communication through any communications protocol. The pathways may function in sequence or in parallel, continuously or intermittently. The pathways can use any of the communications standards, protocols or technologies, described herein with respect to a communications network, in addition to standard parallel instruction sets used by many computers.

The nodes may include any entities capable of performing processing functions. Examples of such nodes that can be used with the examples include computers (such as personal computers, workstations, servers, or mainframes), handheld wireless devices and wireline devices (such as personal digital assistants (PDAs), modem cell phones with processing capability, wireless email devices including BlackBerry^{™} devices), document - processing devices (such as scanners, printers, facsimile machines, or multifunction document machines), or complex entities (such as local-area networks or wide -area networks) to which are connected a collection of processors, as described. For example, in the context of the present disclosure, a node itself can be a wide-area network (WAN), a local-area network (LAN), a private network (such as a Virtual Private Network (VPN)), or a collection of networks.

Communications between the nodes may be made possible by a communications network. A node may be connected either continuously or intermittently with communications network. As an example, in the context of the present disclosure, a communications network can be a digital communications infrastructure providing adequate bandwidth and information security.

The communications network can include wireline communications capability, wireless communications capability, or a combination of both, at any frequencies, using any type of standard, protocol or technology. In addition, in the present examples, the communications network can be a private network (for example, a VPN) or a public network (for example, the Internet).

A non-inclusive list of exemplary wireless protocols and technologies used by a communications network may include Bluetooth^{™}, general packet radio service (GPRS), cellular digital packet data (CDPD), mobile solutions platform (MSP), multimedia messaging (MMS), wireless application protocol (WAP), code division multiple access (CDMA), short message service (SMS), wireless markup language (WML), handheld device markup language (HDML), binary runtime environment for wireless (BREW), radio access network (RAN), and packet switched core networks (PS-CN). Also included are various generation wireless technologies. An exemplary non-inclusive list of primarily wireline protocols and technologies used by a communications network includes asynchronous transfer mode (ATM), enhanced interior gateway routing protocol (EIGRP), frame relay (FR), high-level data link control (HDLC), Internet control message protocol (ICMP), interior gateway routing protocol (IGRP), internetwork packet exchange (IPX), ISDN, point-to-point protocol (PPP), transmission control protocol/internet protocol (TCP/IP), routing information protocol (RIP) and user datagram protocol (UDP). As skilled persons will recognize, any other known or anticipated wireless or wireline protocols and technologies can be used.

Examples of the present disclosure may include apparatuses for performing the operations herein. An apparatus may be specially constructed for the desired purposes, or it may comprise a general -purpose device selectively activated or reconfigured by a program stored in the device.

In one or more examples, the present examples are embodied in machine-executable instructions. The instructions can be used to cause a processing device, for example a general-purpose or special-purpose processor, which is programmed with the instructions, to perform the steps of the present disclosure. Alternatively, the steps of the present disclosure can be performed by specific hardware components that contain hardwired logic for performing the steps, or by any combination of programmed computer components and custom hardware components. For example, the present disclosure can be provided as a computer program product, as outlined above. In this environment, the examples can include a machine-readable medium having instructions stored on it. The instructions can be used to program any processor or processors (or other electronic devices) to perform a process or method according to the present examples. In addition, the present disclosure can also be downloaded and stored on a computer program product. Here, the program can be transferred from a remote computer (e.g., a server) to a requesting computer (e.g., a client) by way of data signals embodied in a carrier wave or other propagation medium via a communication link (e.g., a modem or network connection) and ultimately such signals may be stored on the computer systems for subsequent execution.

The methods can be implemented in a computer program product accessible from a computer-usable or computer-readable storage medium that provides program code for use by or in connection with a computer or any instruction execution system. A computer-usable or computer-readable storage medium can be any apparatus that can contain or store the program for use by or in connection with the computer or instruction execution system, apparatus, or device.

A data processing system suitable for storing and/or executing the corresponding program code can include at least one processor coupled directly or indirectly to computerized data storage devices such as memory elements. Input/output (I/O) devices (including but not limited to keyboards, displays, pointing devices, etc.) can be coupled to the system. Network adapters may also be coupled to the system to enable the data processing system to become coupled to other data processing systems or remote printers or storage devices through intervening private or public networks. To provide for interaction with a user, the features can be implemented on a computer with a display device, such as an LCD (liquid crystal display), or another type of monitor for displaying information to the user, and a keyboard and an input device, such as a mouse or trackball by which the user can provide input to the computer.

A computer program can be a set of instructions that can be used, directly or indirectly, in a computer. The systems and methods described herein can be implemented using programming languages such as CUDA, OpenCL, Flash^{™}, JAVA^{™}, C++, C, C#, Python, Visual Basic^{™}, JavaScript^{™} PHP, XML, HTML, etc., or a combination of programming languages, including compiled or interpreted languages, and can be deployed in any form, including as a stand-alone program or as a subsystem, component, subroutine, or other unit suitable for use in a computing environment. The software can include, but is not limited to, firmware, resident software, microcode, etc. Protocols such as SOAP/HTTP may be used in implementing interfaces between programming subsystems. The components and functionality described herein may be implemented on any desktop operating system executing in a virtualized or non-virtualized environment, using any programming language suitable for software development, including, but not limited to, different versions of Microsoft Windows^{™}, Apple^{™} Mac^{™}, iOS^{™}, Unix^{™}/X-Windows^{™}, Linux^{™}, VMS^{™}, Android, QNX, etc. The system could be implemented using a web application framework, such as Ruby on Rails.

Suitable processors for the execution of a program of instructions include, but are not limited to, general and special purpose microprocessors, and the sole processor or one of multiple processors or cores, of any kind of computer. A processor may receive and store instructions and data from a computerized data storage device such as a read-only memory, a random access memory, both, or any combination of the data storage devices described herein. A processor may include any processing circuitry or control circuitry operative to control the operations and performance of an electronic device.

The systems, subsystems, and methods described herein can be implemented using any combination of software or hardware elements. The systems, subsystems, and methods described herein can be implemented using one or more virtual machines operating alone or in combination with one other. Any applicable virtualization solution can be used for encapsulating a physical computing machine platform into a virtual machine that is executed under the control of virtualization software running on a hardware computing platform or host. The virtual machine can have both virtual system hardware and guest operating system software.

The systems and methods described herein can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, e.g., a LAN, a WAN, and the computers and networks that form the Internet.

One or more examples of the present disclosure may be practiced with other computer system configurations, including hand-held devices, microprocessor systems, microprocessor-based or programmable consumer electronics, minicomputers, mainframe computers, etc. The systems and methods described herein may also be practiced in distributed computing environments where tasks are performed by remote processing devices that are linked through a network.

The terms "computer program medium" and "computer readable medium" may be used to generally refer to media such as but not limited to removable storage drive, a hard disk installed in a hard disk drive. These computer program products may provide software to computer systems. The systems and methods described herein may be directed to such computer program products.

References to "one embodiment," "an embodiment," "example embodiment," "various embodiments," etc., may indicate that the embodiment(s) of the present disclosure may include a particular feature, structure, or characteristic, but not every embodiment necessarily includes the particular feature, structure, or characteristic. Further, repeated use of the phrases "in one embodiment," or "in an exemplary embodiment," do not necessarily refer to the same embodiment, although they may. Similarly, references to "instances" may indicate that various instance(s) of the present disclosure may include a particular feature, structure, or characteristic, but not every instance necessarily includes the particular feature, structure, or characteristic. Further, repeated use of the phrase "in some instances" does not necessarily refer to the same instance, although it may.

An algorithm may generally be considered to be a self-consistent sequence of acts or operations leading to a desired result. These include physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers or the like. It should be understood, however, that all of these and similar terms are to be associated with the appropriate physical quantities and are merely convenient labels applied to these quantities.

Unless specifically stated otherwise, it may be appreciated that throughout the specification terms such as "processing," "computing," "calculating," "determining," or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

In a similar manner, the term "processor" may refer to any device or portion of a device that processes electronic data from registers and/or memory and transform that electronic data into other electronic data that may be stored in registers and/or memory. As non-limiting examples, "processor" may be a Central Processing Unit (CPU) or a Graphics Processing Unit (GPU). A "computing platform" may comprise one or more processors. As used herein, "software" processes may include, for example, software and/or hardware entities that perform work over time, such as tasks, threads, and intelligent agents. Also, each process may refer to multiple processes, for carrying out instructions in sequence or in parallel, continuously or intermittently. The terms "system" and "method" are used herein interchangeably insofar as the system may embody one or more methods and the methods may be considered a system.

In the present document, references may be made to obtaining, acquiring, receiving, or inputting analog or digital data into a subsystem, computer system, or computer-implemented machine. The process of obtaining, acquiring, receiving, or inputting analog and digital data can be accomplished in a variety of ways such as by receiving the data as a parameter of a function call or a call to an application programming interface. In some implementations, the process of obtaining, acquiring, receiving, or inputting analog or digital data can be accomplished by transferring the data via a serial or parallel interface. In another implementation, the process of obtaining, acquiring, receiving, or inputting analog or digital data can be accomplished by transferring the data via a computer network from the providing entity to the acquiring entity. References may also be made to providing, outputting, transmitting, sending, or presenting analog or digital data. In various examples, the process of providing, outputting, transmitting, sending, or presenting analog or digital data can be accomplished by transferring the data as an input or output parameter of a function call, a parameter of an application programming interface or interprocess communication mechanism.

In the description of embodiments, reference is made to the accompanying drawings that form a part hereof, which show by way of illustration specific embodiments of the claimed subject matter. It is to be understood that other embodiments may be used and that changes or alterations, such as structural changes, may be made. Such embodiments, changes or alterations are not necessarily departures from the scope with respect to the intended claimed subject matter. While the steps herein may be presented in a certain order, in some cases the ordering may be changed so that certain inputs are provided at different times or in a different order without changing the function of the systems and methods described. The disclosed procedures could also be executed in different orders. Additionally, various computations that are herein need not be performed in the order disclosed, and other embodiments using alternative orderings of the computations could be readily implemented. In addition to being reordered, the computations could also be decomposed into sub-computations with the same results. In some examples, operations shown may be performed in parallel and substantially simultaneously. In general, although a sequence of blocks may be shown, not all steps may be required to perform the process shown.

Although the discussion above sets forth example implementations of the described techniques, other architectures may be used to implement the described functionality, and are intended to be within the scope of this disclosure. Furthermore, although specific distributions of responsibilities are defined above for purposes of discussion, the various functions and responsibilities might be distributed and divided in different ways, depending on circumstances.

Furthermore, although the subject matter has been described in language specific to structural features and/or methodological acts, it is to be understood that the subject matter defined in the appended claims is not necessarily limited to the specific features or acts described. Rather, the specific features and acts are disclosed as exemplary forms of implementing the claims.

## Claims

1. A system (300), comprising:
one or more processors; and
memory that stores instructions which, when executed by the one or more processors, cause the system to:
receive a message comprising data (310) generated by one or more subsystems of an autonomous vehicle (318), a timestamp, and a topic;
store (312), in a first directory of one or more data stores, a plurality of files, a first file of the plurality of files comprising at least a portion of the data and stored in a first subdirectory of the first directory according to a hierarchy, the hierarchy partitioning the data into the plurality of files corresponding to different time windows based on the timestamp, where the plurality of files of the first directory within the hierarchy are further partitioned into one or a plurality of topics within the different time windows, the plurality of topics including at least one of a first topic comprising raw sensor data generated by the one or more subsystems of the autonomous vehicle, and a second topic comprising data derived from the raw sensor data;
store (312), in a second directory of the one or more data stores, a plurality of second files, a second file of the plurality of second files based at least in part on the portion of the data and stored in a second subdirectory of the second directory according to the hierarchy;
receive a request, the request comprising a requested topic, a start time, or an end time; and
provide one or more of the first file or the second file based at least in part on the requested topic, the start time, or the end time.

2. The system (300) of claim 1, wherein providing one or more of the first file or the second file is based, at least in part, on whether the first file or the second file is associated with the requested topic and a profile indicating a directory preference.

3. The system (300) of claim 1 or claim 2, wherein the first directory is associated with a first access permission and the second directory is associated with a second access permission more restrictive than the first permission,
wherein the request is associated with a request permission level, and
wherein providing one or more of the first file or the second file comprises providing the first file, based at least in part on the first access permission, the second access permission, and the request permission level.

4. The system (300) of any preceding claim, wherein the first topic is related to a first subsystem of the autonomous vehicle and the second topic is related to a second subsystem of the autonomous vehicle, and wherein the request comprises a request for a variant set of data determined based at least in part on data from the first subsystem of the autonomous vehicle and data from the second subsystem of the autonomous vehicle between the start time and the end time.

5. The system (300) of any preceding claim, wherein the first directory comprises a first root directory indicative of a first storage location on the one or more data stores and the second directory comprises a second root directory indicative of a second storage location on the one or more data stores, the first storage location differing from the second storage location.

6. The system (300) of claim 5, wherein the first storage location is located in a local data store optimized for quick access.

7. A method (400), comprising:
receiving first device data (412), the first device data comprised of a first plurality of files and corresponding to message data generated by one or more subsystems of an autonomous vehicle during a time period;
storing (422), on one or more data stores (410) and at a first location, the first plurality of files according to a hierarchical data structure (420), the hierarchical data structure partitioning the data into the first plurality of files corresponding to different time windows based on a timestamp, where the hierarchical data structure further partitions the first plurality of files of the first location into one or a plurality of topics within the different time windows, the plurality of topics including at least one of a first topic comprising raw sensor data generated by the one or more subsystems of the autonomous vehicle, and a second topic comprising data derived from the raw sensor data;
obtaining second device data comprising a second plurality of files, the second device data associated with the time period; and
storing (430) the second device data at a second location on the one or more data stores according to the hierarchical data structure.

8. The method (400) of claim 7, wherein the second device data comprises data derived from the first plurality of files.

9. The method (400) of claim 7 or claim 8, wherein a file of the first plurality of files is comprised of a plurality of messages of the message data, the file being less than a threshold size.

10. The method (400) of claim 9, wherein a message of the plurality of messages comprises:
a message type,
a timestamp the message was created, and
a message number.

11. The method (400) of any of claims 7 to 10, wherein the first plurality of files are stored in a first data store, and wherein the second plurality of files are stored in a second data store based on latency or frequency of use of the second plurality of files.

12. The method (400) of any of claims 7 to 11, wherein the first location is associated with a first access permission and the second location is associated with a second access permission, the second access permission being more restrictive than the first access permission.

13. The method (400) of claim 12, further comprising:
receiving a request, the request comprising a request data identifier, a start time, an end time, and a request permission level; and
transmitting, based at least in part on the request, the first access permission, the second access permission, and a profile, a first file of the first plurality of files or a second file of the second plurality of files,
wherein the profile provides instructions to access the first plurality of files or the second plurality of files based at least in part on the request data identifier.

14. The method (400) of any of claims 7 to 13, wherein the first device data is obtained from a first subsystem of the autonomous vehicle and the second device data is obtained from a second subsystem of the autonomous vehicle.

15. One or more non-transitory computer readable media having instructions stored thereon that, when executed by one or more processors, cause the one or more processors to perform the method of any one of claims 7-14.

## Patentansprüche

1. System (300), umfassend:
einen oder mehrere Prozessoren; und
Speicher, der Anweisungen speichert, die, wenn sie durch einen oder mehrere Prozessoren ausgeführt werden, das System veranlassen zum:
Empfangen einer Nachricht, umfassend Daten (310), die durch ein oder mehrere Untersysteme eines autonomen Fahrzeugs (318) erzeugt werden, einen Zeitstempel und ein Thema;
Speichern (312), in einem ersten Verzeichnis eines oder mehrerer Datenspeicher, einer Vielzahl von Dateien, eine erste Datei der Vielzahl von Dateien umfassend mindestens einen Teil der Daten und in einem ersten Unterverzeichnis des ersten Verzeichnisses gemäß einer Hierarchie gespeichert, wobei die Hierarchie die Daten in die Vielzahl von Dateien aufteilt, die basierend auf dem Zeitstempel unterschiedlichen Zeitfenstern entsprechen, wobei die Vielzahl von Dateien des ersten Verzeichnisses innerhalb der Hierarchie ferner in ein oder eine Vielzahl von Themen innerhalb der unterschiedlichen Zeitfenster aufgeteilt ist, wobei die Vielzahl von Themen mindestens eines von einem ersten Thema, umfassend Rohsensordaten, die durch das eine oder die mehreren Untersysteme des autonomen Fahrzeugs erzeugt werden, und einem zweiten Thema einschließt, umfassend Daten, die von den Rohsensordaten abgeleitet sind;
Speichern (312), in einem zweiten Verzeichnis des einen oder der mehreren Datenspeicher, einer Vielzahl von zweiten Dateien, wobei eine zweite Datei der Vielzahl von zweiten Dateien mindestens teilweise auf dem Abschnitt der Daten basiert und gemäß der Hierarchie in einem zweiten Unterverzeichnis des zweiten Verzeichnisses gespeichert ist;
Empfangen einer Anforderung, die Anforderung umfassend ein angefordertes Thema, eine Startzeit oder eine Endzeit; und
Bereitstellen einer oder mehrerer der ersten Datei oder der zweiten Dateien mindestens teilweise basierend auf dem angeforderten Thema, der Startzeit oder der Endzeit.

2. System (300) nach Anspruch 1, wobei das Bereitstellen einer oder mehrerer der ersten Datei oder der zweiten Dateien mindestens teilweise darauf basiert, ob die erste Datei oder die zweite Datei dem angeforderten Thema und einem Profil zugeordnet ist, das eine Verzeichnispräferenz angibt.

3. System (300) nach Anspruch 1 oder 2, wobei das erste Verzeichnis einer ersten Zugriffsberechtigung zugeordnet ist und das zweite Verzeichnis einer zweiten Zugriffsberechtigung zugeordnet ist, die restriktiver als die erste Berechtigung ist,
wobei die Anforderung einer Anforderungsberechtigungsstufe zugeordnet ist, und
wobei das Bereitstellen einer oder mehrerer der ersten Datei oder der zweiten Dateien das Bereitstellen der ersten Datei mindestens teilweise basierend auf der ersten Zugriffsberechtigung, der zweiten Zugriffsberechtigung und der Anforderungsberechtigungsstufe umfasst.

4. System (300) nach einem der vorstehenden Ansprüche, wobei das erste Thema ein erstes Untersystem des autonomen Fahrzeugs betrifft und das zweite Thema ein zweites Untersystem des autonomen Fahrzeugs betrifft, und wobei die Anforderung eine Anforderung für einen Variantendatensatz umfasst, der mindestens teilweise basierend auf Daten des ersten Untersystems des autonomen Fahrzeugs und Daten des zweiten Untersystems des autonomen Fahrzeugs zwischen der Startzeit und der Endzeit bestimmt wird.

5. System (300) nach einem der vorstehenden Ansprüche, wobei das erste Verzeichnis ein erstes Stammverzeichnis umfasst, das einen ersten Speicherort auf dem einen oder den mehreren Datenspeichern angibt, und das zweite Verzeichnis ein zweites Stammverzeichnis umfasst, das einen zweiten Speicherort auf dem einen oder den mehreren Datenspeichern angibt, wobei sich der erste Speicherort von dem zweiten Speicherort unterscheidet.

6. System (300) nach Anspruch 5, wobei sich der erste Speicherort in einem lokalen Datenspeicher befindet, der für einen schnellen Zugriff optimiert ist.

7. Verfahren (400), umfassend:
Empfangen erster Vorrichtungsdaten (412), wobei die ersten Vorrichtungsdaten aus einer ersten Vielzahl von Dateien bestehen und Nachrichtendaten entsprechen, die durch ein oder mehrere Untersysteme eines autonomen Fahrzeugs während eines Zeitraums erzeugt werden;
Speichern (422), auf einem oder mehreren Datenspeichern (410) und an einem ersten Ort, der ersten Vielzahl von Dateien gemäß einer hierarchischen Datenstruktur (420), wobei die hierarchische Datenstruktur die Daten basierend auf einem Zeitstempel in die erste Vielzahl von Dateien aufteilt, die unterschiedlichen Zeitfenstern entsprechen, wobei die hierarchische Datenstruktur die erste Vielzahl von Dateien des ersten Orts ferner in ein oder eine Vielzahl von Themen innerhalb der unterschiedlichen Zeitfenster aufteilt, wobei die Vielzahl von Themen mindestens eines von einem ersten Thema, umfassend Rohsensordaten, die durch das eine oder die mehreren Untersysteme des autonomen Fahrzeugs erzeugt werden, und einem zweiten Thema einschließt, umfassend Daten, die von den Rohsensordaten abgeleitet sind;
Erhalten zweiter Vorrichtungsdaten, umfassend eine zweite Vielzahl von Dateien, wobei die zweiten Vorrichtungsdaten dem Zeitraum zugeordnet sind; und
Speichern (430) der zweiten Vorrichtungsdaten an einem zweiten Ort auf dem einen oder den mehreren Datenspeichern gemäß der hierarchischen Datenstruktur.

8. Verfahren (400) nach Anspruch 7, wobei die zweiten Vorrichtungsdaten Daten umfassen, die von der ersten Vielzahl von Dateien abgeleitet sind.

9. Verfahren (400) nach Anspruch 7 oder 8, wobei eine Datei der ersten Vielzahl von Dateien aus einer Vielzahl von Nachrichten der Nachrichtendaten besteht, wobei die Datei eine Größe aufweist, die unter einer Schwellengröße liegt.

10. Verfahren (400) nach Anspruch 9, wobei eine Nachricht der Vielzahl von Nachrichten umfasst:
einen Nachrichtentyp,
einen Zeitstempel, wann die Nachricht erstellt wurde, und
eine Nachrichtennummer.

11. Verfahren (400) nach einem der Ansprüche 7 bis 10, wobei die erste Vielzahl von Dateien in einem ersten Datenspeicher gespeichert ist und wobei die zweite Vielzahl von Dateien basierend auf der Latenz oder Nutzungshäufigkeit der zweiten Vielzahl von Dateien in einem zweiten Datenspeicher gespeichert ist.

12. Verfahren (400) nach einem der Ansprüche 7 bis 11, wobei der erste Ort einer ersten Zugriffsberechtigung zugeordnet ist und der zweite Ort einer zweiten Zugriffsberechtigung zugeordnet ist, wobei die zweite Zugriffsberechtigung restriktiver als die erste Zugriffsberechtigung ist.

13. Verfahren (400) nach Anspruch 12, ferner umfassend:
Empfangen einer Anforderung, wobei die Anforderung eine Anforderungsdatenkennung, eine Startzeit, eine Endzeit und eine Anforderungsberechtigungsstufe umfasst; und
Übertragen, mindestens teilweise basierend auf der Anforderung, der ersten Zugriffsberechtigung, der zweiten Zugriffsberechtigung und eines Profils, einer ersten Datei der ersten Vielzahl von Dateien oder einer zweiten Datei der zweiten Vielzahl von Dateien,
wobei das Profil Anweisungen bereitstellt, um auf die erste Vielzahl von Dateien oder die zweite Vielzahl von Dateien zuzugreifen, die mindestens teilweise auf der Anforderungsdatenkennung basieren.

14. Verfahren (400) nach einem der Ansprüche 7 bis 13, wobei die ersten Vorrichtungsdaten von einem ersten Untersystem des autonomen Fahrzeugs erhalten werden und die zweiten Vorrichtungsdaten von einem zweiten Untersystem des autonomen Fahrzeugs erhalten werden.

15. Ein oder mehrere nichtflüchtige, computerlesbare Medien, die darauf gespeicherte Anweisungen aufweisen, die, wenn sie durch einen oder mehrere Prozessoren ausgeführt werden, den einen oder die mehreren Prozessoren veranlassen, das Verfahren nach einem der Ansprüche 7 bis 14 durchführen.

## Revendications

1. Système (300), comprenant :
un ou plusieurs processeurs ; et
une mémoire qui stocke des instructions qui, lorsqu'elles sont exécutées par le ou les processeurs, amènent le système à :
recevoir un message comprenant des données (310) générées par un ou plusieurs sous-systèmes d'un véhicule autonome (318), un horodatage, et un sujet ;
stocker (312), dans un premier répertoire d'un ou de plusieurs magasins de données, une pluralité de fichiers, un premier fichier de la pluralité de fichiers comprenant au moins une partie des données et étant stocké dans un premier sous-répertoire du premier répertoire selon une hiérarchie, la hiérarchie partitionnant les données en la pluralité de fichiers correspondant à différentes fenêtres temporelles sur la base de l'horodatage, dans lequel la pluralité de fichiers du premier répertoire au sein de la hiérarchie est en outre partitionnée en un ou une pluralité de sujets au sein des différentes fenêtres temporelles, la pluralité de sujets comportant au moins l'un parmi premier sujet comprenant des données brutes de capteurs générées par le ou les sous-systèmes du véhicule autonome, et un second sujet comprenant des données dérivées des données brutes de capteurs ;
stocker (312), dans un second répertoire du ou des magasins de données, une pluralité de seconds fichiers, un second fichier de la pluralité de seconds fichiers étant basé au moins en partie sur la partie des données et étant stocké dans un second sous-répertoire du second répertoire conformément à la hiérarchie ;
recevoir une demande, la demande comprenant un sujet demandé, une heure de début ou une heure de fin ; et
fournir un ou plusieurs fichiers parmi le premier fichier ou le second fichier sur la base au moins en partie du sujet demandé, de l'heure de début ou de l'heure de fin.

2. Système (300) selon la revendication 1, dans lequel la fourniture d'un ou plusieurs fichiers parmi le premier fichier ou le second fichier est basée, au moins en partie, sur le fait que le premier fichier ou le second fichier est associé au sujet demandé et à un profil indiquant une préférence de répertoire.

3. Système (300) selon la revendication 1 ou la revendication 2, dans lequel le premier répertoire est associé à une première autorisation d'accès et le second répertoire est associé à une seconde autorisation d'accès plus restrictive que la première autorisation,
dans lequel la demande est associée à un niveau d'autorisation de demande, et
dans lequel la fourniture d'un ou plusieurs fichiers parmi le premier ou le second fichier comprend la fourniture du premier fichier, sur la base, au moins en partie, de la première autorisation d'accès, de la seconde autorisation d'accès, et du niveau d'autorisation de demande.

4. Système (300) selon une quelconque revendication précédente, dans lequel le premier sujet est lié à un premier sous-système du véhicule autonome et le second sujet est lié à un second sous-système du véhicule autonome, et dans lequel la demande comprend une demande pour un ensemble variant de données déterminé sur la base au moins en partie de données provenant du premier sous-système du véhicule autonome et de données provenant du second sous-système du véhicule autonome entre l'heure de début et l'heure de fin.

5. Système (300) selon une quelconque revendication précédente, dans lequel le premier répertoire comprend un premier répertoire racine indiquant un premier emplacement de stockage sur le ou les magasins de données et le second répertoire comprend un second répertoire racine indiquant un second emplacement de stockage sur le ou les magasins de données, le premier emplacement de stockage étant différent du second emplacement de stockage.

6. Système (300) selon la revendication 5, dans lequel le premier emplacement de stockage est situé dans un magasin de données local optimisé pour un accès rapide.

7. Procédé (400), comprenant :
la réception de premières données de dispositif (412), les premières données de dispositif étant constituées d'une première pluralité de fichiers et correspondant à des données de messages générées par un ou plusieurs sous-systèmes d'un véhicule autonome au cours d'une période de temps ;
le stockage (422), sur un ou plusieurs magasins de données (410) et à un premier emplacement, de la première pluralité de fichiers selon une structure de données hiérarchique (420), la structure de données hiérarchique partitionnant les données en la première pluralité de fichiers correspondant à différentes fenêtres temporelles sur la base d'un horodatage, la structure de données hiérarchique partitionnant en outre la première pluralité de fichiers du premier emplacement en un ou une pluralité de sujets au sein des différentes fenêtres temporelles, la pluralité de sujets comportant au moins l'un parmi un premier sujet comprenant des données de capteur brutes générées par le ou les sous-systèmes du véhicule autonome, et un second sujet comprenant des données dérivées des données de capteur brutes ;
l'obtention de secondes données de dispositif comprenant une seconde pluralité de fichiers, les secondes données de dispositif étant associées à la période de temps ; et
le stockage (430) des secondes données de dispositif à un second emplacement sur le ou les magasins de données conformément à la structure de données hiérarchique.

8. Procédé (400) selon la revendication 7, dans lequel les secondes données de dispositif comprennent des données dérivées de la première pluralité de fichiers.

9. Procédé (400) selon la revendication 7 ou la revendication 8, dans lequel un fichier de la première pluralité de fichiers est constitué d'une pluralité de messages des données de messages, le fichier étant inférieur à une taille seuil.

10. Procédé (400) selon la revendication 9, dans lequel un message de la pluralité de messages comprend :
un type de message,
un horodatage auquel le message a été créé, et
un numéro de message.

11. Procédé (400) selon l'une quelconque des revendications 7 à 10, dans lequel la première pluralité de fichiers est stockée dans un premier magasin de données, et dans lequel la seconde pluralité de fichiers est stockée dans un second magasin de données sur la base de la latence ou de la fréquence d'utilisation de la seconde pluralité de fichiers.

12. Procédé (400) de l'une quelconque des revendications 7 à 11, dans lequel le premier emplacement est associé à une première autorisation d'accès et le second emplacement est associé à une seconde autorisation d'accès, la seconde autorisation d'accès étant plus restrictive que la première autorisation d'accès.

13. Procédé (400) selon la revendication 12, comprenant en outre :
la réception d'une demande, la demande comprenant un identificateur de données de demande, une heure de début, une heure de fin, et un niveau d'autorisation de demande ; et
la transmission, sur la base au moins en partie de la demande, de la première autorisation d'accès, de la seconde autorisation d'accès, et d'un profil, d'un premier fichier de la première pluralité de fichiers ou d'un second fichier de la seconde pluralité de fichiers,
dans lequel le profil fournit des instructions pour accéder à la première pluralité de fichiers ou à la seconde pluralité de fichiers sur la base, au moins en partie, de l'identificateur de données de demande.

14. Procédé (400) selon l'une quelconque des revendications 7 à 13, dans lequel les premières données de dispositif sont obtenues à partir d'un premier sous-système du véhicule autonome et les secondes données de dispositif sont obtenues à partir d'un second sous-système du véhicule autonome.

15. Un ou plusieurs supports informatiques non transitoires sur lesquels sont stockées des instructions qui, lorsqu'elles sont exécutées par un ou plusieurs processeurs, amènent le ou les processeurs à effectuer le procédé selon l'une quelconque des revendications 7 à 14.
